# EUROPEAN PATENT SPECIFICATION

(11) **EP 3 367 722 B1**
(45) Date of publication and mention of the grant of the patent: **13.05.2020**
(21) Application number: 18157920.2
(22) Date of filing: 21.02.2018
(51) Int. Cl.: H04W 16/20, H04W 24/02, H04W 84/12

(54) **ELECTRONIC DEVICE AND METHOD FOR DETERMINING SUITABLE LOCATION OF ACCESS POINT DEVICE THEREOF**
ELEKTRONISCHE VORRICHTUNG UND VERFAHREN ZUR BESTIMMUNG EINES GEEIGNETEN STANDORTS EINER ZUGANGSPUNKTVORRICHTUNG DAVON
DISPOSITIF ÉLECTRONIQUE ET PROCÉDÉ DE DÉTERMINATION D'EMPLACEMENT APPROPRIÉ DE SON DISPOSITIF DE POINT D'ACCÈS

(30) Priority: 24.02.2017 KR 20170025081
(43) Date of publication of application: 29.08.2018
(73) Proprietor: Samsung Electronics Co., Ltd., Suwon-si, Gyeonggi-do 16677 (KR)
(72) Inventor: Park, Junyoung, 16677 Suwon-si (KR); Lee, Sunkey, 16677 Suwon-si (KR); Kim, Moonsoo, 16677 Suwon-si (KR); Kim, Seonghwan, 16677 Suwon-si (KR); Jeong, Kiyeong, 16677 Suwon-si (KR); Jung, Insick, 16677 Suwon-si (KR); Jung, Junyeop, 16677 Suwon-si (KR); Kang, Doosuk, 16677 Suwon-si (KR); Choi, Bokun, 16677 Suwon-si (KR)
(74) Representative: Nederlandsch Octrooibureau

(56) References cited:
- JP-A- 2016 139 893
- US-A1- 2010 150 027
- US-A1- 2013 052 961
- US-A1- 2015 312 774
- US-A1- 2015 365 833

## Description

### BACKGROUND

### 1. Field of the Disclosure

The present disclosure relates generally to an electronic device, and more particularly to a method for determining a suitable location of an access point (AP) using the electronic device.

### 2. Description of the Related Art

In the case where an electronic terminal (e.g., station (STA)) accesses a wireless local area network (LAN) that is not a mobile communication network (e.g., global system for mobile communication (GSM), third generation (3G), or long term evolution (LTE)), an access point or a wireless LAN router can provide a corresponding wireless access service. Such an access point can perform wireless communication with various kinds of terminals that are connected to a wired network, transfer a signal transmitted by a corresponding terminal to the wired network, and transfer a signal received from the wired network to the corresponding terminal.

The access point may be unable to transceive a suitable signal to and/or from all regions desired by the access point. For example, if an area in which a wireless LAN is intended to be used is larger than the maximum coverage area of the access point or a large number of communication terminals are being used, the wireless LAN may not be service the desired area using a single access point. Further, if a user has deployed an access point without considering the necessary coverage area, a signal may not be properly transceived in that area.

In this case, all the desired area can be covered through the installation of additional access points.

In the case of additionally installed access points , determining the location of a new access point to be installed so as to be accessible to a wireless LAN in a desired space may be important. Each access point typically provides a separate UI, and if a user intends to install an additional access point, it may be difficult to determine a suitable location for each installation.

JP 2016 139893 A discloses that it is a main phone and a measuring device in which wireless communications are possible which send an electric wave, and sets to each of a plurality of positions, A measuring device provided with a measurement part which measures the 1st electric wave intensity which is the intensity of an electric wave received from the main phone, and the 2nd electric wave intensity which is the intensity of an electric wave received from electric wave transmitters other than the main phone concerned, and a specific part which specifies the relationship of each position based on a measurement result of an electric wave in each position is provided. A figure showing an example of an electric wave environmental map which displays electric wave environment in a house visually is also disclosed.

US 2015/365833 A1 discloses a client device acting as the access point that builds a table or other data structure of link data/statistics internally (using the application software present thereon), from data collected from the other client devices in the premises network.

US 2013/052961 A1 relates to surveying a site for installation of wireless access points, wherein a map of the site under survey is displayed. US 2015/312774 A1 refers to a wireless coverage characterization platform, which uses an autonomous vehicle or robot to autonomously collect key wireless coverage parameters for an indoor environment. Document US 2010/150027 A1 discloses wireless ad hoc networking enhancements to enable deployment of networks with greater coverage.

### SUMMARY

Aspects of the invention are defined in the independent claims. The dependent claims define advantageous embodiments. An aspect of the present disclosure provides information related to a suitable location of an additional access point to be installed using an electronic device (e.g., portable electronic device) other than the existing access point or the new access point to be installed.

In accordance with an aspect of the present disclosure, a method of determining a location for an access point using an electronic device as according to claim 1 is provided.

In accordance with another aspect of the present disclosure, an electronic device as according to claim 6 is provided.

### BRIEF DESCRIPTION OF THE DRAWINGS

The above and other aspects, features, and advantages of the present disclosure will be more apparent from the following detailed description taken in conjunction with the accompanying drawings, in which:
FIG. 1 is a diagram illustrating an electronic device in a network environment according to various embodiments of the present disclosure;
FIG. 2 is a block diagram of an electronic device according to various embodiments of the present disclosure;
FIG. 3 is a block diagram of a program module;
FIG. 4 is a diagram of a network configuration including an access point and an electronic device according to various examples;
FIG. 5 is a block diagram of an access point according to various examples;
FIG. 6 is a block diagram of an electronic device according to various embodiments of the present disclosure;
FIG. 7 is a diagram of a software structure of an electronic device according to various embodiments of the present disclosure;
FIG. 8 is a flowchart of a method of recommending a location of a second access point using an electronic device according to various embodiments and examples of the present disclosure;
FIG. 9 is a flowchart of a method for an electronic device to determine suitable location candidates based on a radio signal according to various embodiments of the present disclosure;
FIG. 10 is a flowchart of a method for an electronic device to determine a second value using a pre-measured conversion table according to the invention;
FIG. 11 is a flowchart of a method for an electronic device to determine a difference between a minimum received signal strength indication (RSSI) value measured by an electronic device and an expected minimum RSSI value of a second access point according to various embodiments of the present disclosure;
FIG. 12 is a flowchart of a method for an electronic device to obtain an expected throughput through reflection of a difference between the calculated minimum RSSI values and to determine whether each location is a suitable location according to various embodiments of the present disclosure;
FIG. 13 is a flowchart of a method for an electronic device to provide information on whether each location is a suitable location of an access point according to various embodiments of the present disclosure;
FIGS. 14 to 16 are diagrams illustrating UIs for an electronic device to notify of whether each location is a suitable location of an access point according to various embodiments of the present disclosure; and
FIGS. 17 and 18 are diagrams illustrating a method for selecting an optimum location through reflection of suitable location candidates of an access point measured.

### DETAILED DESCRIPTION

Hereinafter, embodiments of the present disclosure and examples useful for understanding the invention are described in greater detail with reference to the accompanying drawings. The same reference numbers are used throughout the drawings to refer to the same or like parts.

The expressions "comprising" or "may comprise" used in the present disclosure indicate the presence of a corresponding function, operation, or element, and do not limit an additional function, operation, or element. Further, in the present disclosure, the terms "comprise" or "have" indicate the presence of a characteristic, a numeral, a step, an operation, an element, a component, or a combination thereof described in the disclosure, and do not exclude the presence or addition of another characteristic, numeral, step, operation, element, component, or combination thereof.

In the present disclosure, an expression "or" includes any combination or the entire combination of all words listed together. For example, "A or B" may include A, B, or A and B. The term "and/or" covers a combination of a plurality of items, or any of the plurality of items.

The expressions first, second, etc. in the present disclosure may represent various elements of the present disclosure, but do not limit the corresponding elements. For example, the expressions do not limit order and/or importance of the corresponding elements. The expressions may be used for distinguishing one element from another element. For example, both a first user device and a second user device are user devices, and represent different user devices.

When it is described that an element is "coupled" to another element, the element may be "directly coupled" to the other element or "electrically coupled" to the other element through a third element. However, when it is described that an element is "directly coupled" to another element, no element may exist between the element and the other element.

Unless defined differently, terms including a technical term and a scientific term used in the present disclosure have the same meaning as a meaning that may be generally understood by a person skilled in the art. It is understood that generally using terms defined in a dictionary have a meaning corresponding to that of a context of related technology, and are not analyzed as an ideal or excessively formal meaning unless explicitly defined.

In the present disclosure, an electronic device may be a device that involves a communication function. For example, an electronic device may be a smart phone, a tablet personal computer (PC), a mobile phone, a video phone, an e-book reader, a desktop PC, a laptop PC, a notebook computer, a personal digital assistant (PDA), a portable multimedia player (PMP), an MP3 player, a portable medical device, a digital camera, or a wearable device (e.g., an head-mounted device (HMD) such as electronic glasses, electronic clothes, an electronic bracelet, an electronic necklace, an electronic accessory, or a smart watch), etc., but is not limited thereto.

According to various embodiments of the present disclosure, an electronic device may be a smart home appliance that involves a communication function. For example, an electronic device may be a TV, a (digital versatile disk (DVD) player, audio equipment, a refrigerator, an air conditioner, a vacuum cleaner, an oven, a microwave, a washing machine, an air cleaner, a set-top box, a TV box (e.g., Samsung HomeSync™, Apple TV™, Google TV™, etc.), a game console, an electronic dictionary, an electronic key, a camcorder, or an electronic picture frame.

According to various embodiments of the present disclosure, an electronic device may be a medical device (e.g., magnetic resonance angiography apparatus (MRA), magnetic resonance imaging apparatus (MRI), computed tomography (CT) machine, ultrasonic machine, etc.), a navigation device, a global positioning system (GPS) receiver, an event data recorder (EDR), a flight data recorder (FDR), a car infotainment device, electronic equipment for ship (e.g., a marine navigation system, a gyrocompass, etc.), avionics, security equipment, or an industrial or home robot, etc., but is not limited thereto.

According to various embodiments of the present disclosure, an electronic device may be furniture, or part of a building or construction having a communication function, an electronic board, an electronic signature receiving device, a projector, or various measuring instruments (e.g., a water meter, an electric meter, a gas meter, a wave meter, etc.), etc., but is not limited thereto. An electronic device disclosed herein may be one of the above-mentioned devices or any combination thereof. As is well understood by those skilled in the art, the above-mentioned electronic devices are embodiments only and are not to be considered as a limitation of the present disclosure.

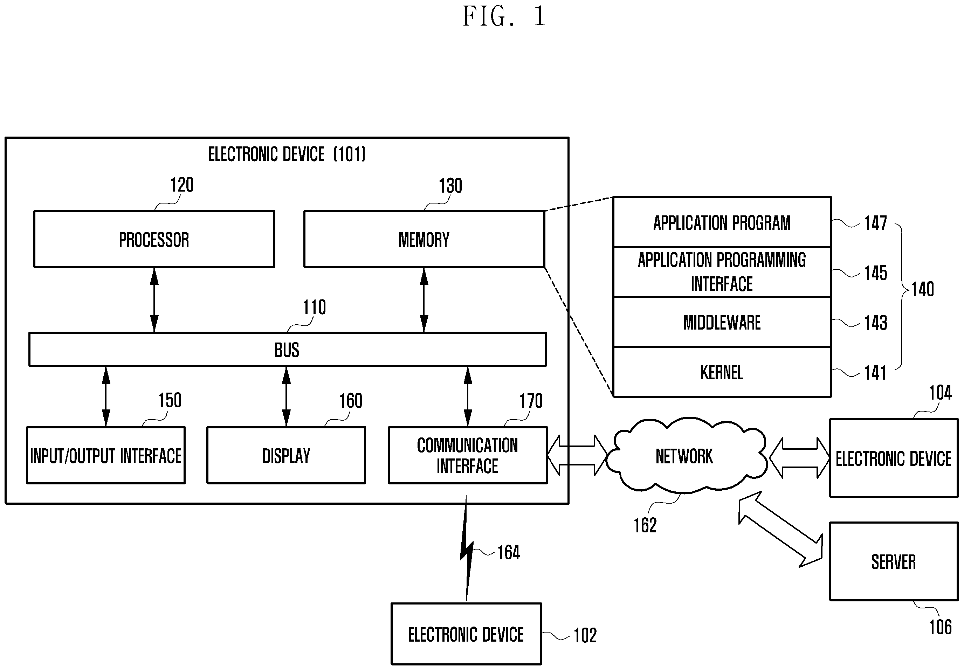

FIG. 1 is a block diagram illustrating an electronic device in a network environment according to various embodiments of the present disclosure.

Referring to FIG. 1, the electronic device 101 may include a bus 110, a processor 120 (e.g., processing circuitry), a memory 130, an input/output interface 150 (e.g., input/output circuitry), a display 160, and a communication interface 170 (e.g., communication circuitry).

The bus 110 may be a circuit for interconnecting elements described above and for allowing a communication, e.g. by transferring a control message, between the elements described above.

The processor 120 can receive commands from the above-mentioned other elements, e.g. the memory 130, the input/output interface 150, the display 160, and the communication interface 170, through, for example, the bus 110, can decipher the received commands, and perform operations and/or data processing according to the deciphered commands.

The memory 130 can store commands received from the processor 120 and/or other elements, e.g. the input/output interface 150, the display 160, and the communication interface 170, and/or commands and/or data generated by the processor 120 and/or the other elements. The memory 130 may include software and/or programs 140, such as a kernel 141, middleware 143, an application programming interface (API) 145, and applications 147. Each of the programming modules described above may be configured by software, firmware, hardware, and/or combinations of two or more thereof.

The kernel 141 can control and/or manage system resources, e.g. the bus 110, the processor 120, or the memory 130, used for execution of operations and/or functions implemented in other programming modules, such as the middleware 143, the API 145, and/or the applications 147. Further, the kernel 141 can provide an interface through which the middleware 143, the API 145, and/or the applications 147 can access and then control and/or manage an individual element of the electronic device 101.

The middleware 143 can perform a relay function which allows the API 145 and/or the applications 147 to communicate with, and exchange data with the kernel 141. Further, in relation to operation requests received from at least one of the applications 147, the middleware 143 can perform load balancing in relation to the operation requests by, for example, giving a priority for using a system resource, e.g. the bus 110, the processor 120, and/or the memory 130, of the electronic device 101 to at least one application from among the at least one of the applications 147.

The API 145 is an interface through which the applications 147 can control a function provided by the kernel 141 and/or the middleware 143, and may include, for example, at least one interface or function for file control, window control, image processing, and/or character control.

The input/output interface 150 may include various input/output circuitry and can receive, for example, a command and/or data from a user, and transfer the received command and/or data to the processor 120 and/or the memory 130 through the bus 110. The display 160 can display an image, a video, and/or data to a user.

The communication interface 170 can establish a communication between the electronic device 101 and other electronic devices 102 and 104, and/or a server 106. The communication interface 170 can support short range communication protocols 164, e.g. a wireless fidelity (WiFi) protocol, a Bluetooth™ (BT) protocol, and a near field communication (NFC) protocol, communication networks, e.g. Internet, LAN, wire area network (WAN), a telecommunication network, a cellular network, a satellite network, or a plain old telephone service (POTS), any other similar and/or suitable communication networks, such as network 162, etc. Each of the electronic devices 102 and 104 may be a same type and/or different types of electronic device 101.

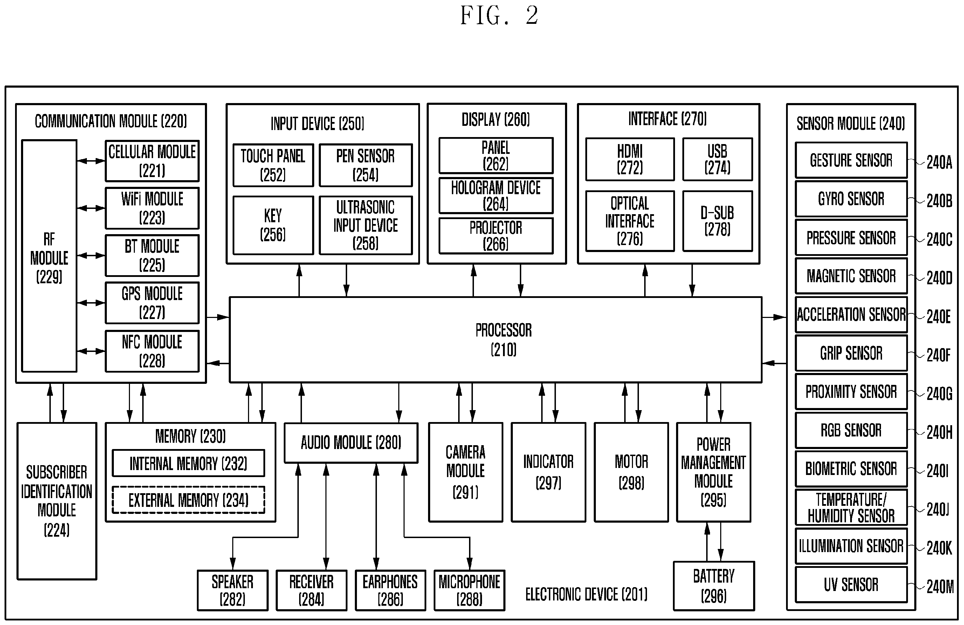

FIG. 2 is a block diagram illustrating an electronic device 201 according to various embodiments of the present disclosure. The electronic device 201 may form, for example, the whole or part of the electronic device 101.

Referring to FIG. 2, the electronic device 201 may include at least one application processor 210 (e.g., processing circuitry), a communication module 220 (e.g., communication circuitry), a subscriber identification module (SIM) 224, a memory 230, a sensor module 240, an input device 250 (e.g., input circuitry), a display 260, an interface 270 (e.g. interface circuitry), an audio module 280, a camera module 291, a power management module 295, a battery 296, an indicator 297, and a motor 298.

The application processor 210 may include various processing circuitry, and drive an operating system (OS) or applications, control a plurality of hardware or software components connected thereto, and also perform processing and operation for various data including multimedia data. The application processor 210 may be formed as a system-on-chip (SoC), for example. According to an embodiment of the present disclosure, the application processor 210 may further include a graphic processing unit (GPU).

The communication module 220 (e.g., the communication interface 170) may perform data communication with another electronic device (e.g., the electronic device 104 or the server 106) connected to the electronic device 201 through the network. According to an embodiment of the present disclosure, the communication module 220 may include various communication circuitry, such as, for example, and without limitation, a cellular module 221, a WiFi module 223, a BT module 225, a GPS module 227, an NFC module 228, and an radio frequency (RF) module 229.

The cellular module 221 may provide a voice call, a video call, a message service, an Internet service, etc. through a communication network (e.g., LTE, LTE advance (LTE-A), code division multiple access (CDMA), wideband CDMA (WCDMA), universal mobile telecommunication system (UMTS), wireless broadband (WiBro), GSM, etc.). Additionally, the cellular module 221 may perform identification and authentication of the electronic device in the communication network, using the SIM 224. According to an embodiment of the present disclosure, the cellular module 221 may perform at least part of functions the application processor 210 can provide. For example, the cellular module 221 may perform at least part of a multimedia control function.

According to an embodiment of the present disclosure, the cellular module 221 may include a communication processor (CP). Additionally, the cellular module 221 may be formed as an SoC. Although some elements such as the cellular module 221 (e.g., the CP), the memory 230, or the power management module 295 are illustrated as separate and distinct elements from the application processor 210, the application processor 210 may be formed to have at least part (e.g., the cellular module 221) of the above elements.

According to an embodiment of the present disclosure, the application processor 210 or the cellular module 221 (e.g., the CP) may load commands or data, received from a nonvolatile memory connected thereto or from at least one of the other elements, into a volatile memory to process them. Additionally, the application processor 210 or the cellular module 221 may store data, received from or created by one or more of the other elements, in the nonvolatile memory.

Each of the WiFi module 223, the BT module 225, the GPS module 227 and the NFC module 228 may include a processor for processing data transceived therethrough. According to an embodiment of the present disclosure, the cellular module 221, the WiFi module 223, the BT module 225, the GPS module 227, and the NFC module 228 may be contained in a single integrated circuit (IC) chip or a single IC package. For example, at least part (e.g., the CP corresponding to the cellular module 221 and a WiFi processor corresponding to the WiFi module 223) of respective processors corresponding to the cellular module 221, the WiFi module 223, the BT module 225, the GPS module 227, and the NFC module 228 may be formed as a single SoC.

The RF module 229 may transceive data, e.g., RF signals or any other electric signals. The RF module 229 may include a transceiver, a power amp module (PAM), a frequency filter, a low noise amplifier (LNA), etc. Also, the RF module 229 may include any component, e.g., a wire or a conductor, for transmission of electromagnetic waves in a free air space. According to an embodiment of the present disclosure, at least one of the cellular module 221, the WiFi module 223, the BT module 225, the GPS module 227, and the NFC module 228 may transceive RF signals through a separate RF module.

The SIM 224 may be a specific card and may be inserted into a slot formed at a certain place of the electronic device 201. The SIM 224 may contain therein an integrated circuit card identifier (ICCID) () or an international mobile subscriber identity (IMSI)).

The memory 230 may include an internal memory 232 and/or an external memory 234. The internal memory 232 may include, for example, at least one of a volatile memory (e.g., dynamic RAM (DRAM), static RAM (SRAM), synchronous DRAM (SDRAM), etc.) or a nonvolatile memory (e.g., one time programmable ROM (OTPROM), programmable ROM (PROM), erasable and programmable ROM (EPROM), electrically erasable and programmable ROM (EEPROM), mask ROM, flash ROM, NAND flash memory, NOR flash memory, etc.).

According to an embodiment of the present disclosure, the internal memory 232 may have the form of a solid state drive (SSD). The external memory 234 may include a flash drive, e.g., compact flash (CF), secure digital (SD), micro secure digital (Micro-SD), mini secure digital (Mini-SD), extreme digital (xD), memory stick, etc. The external memory 234 may be functionally connected to the electronic device 201 through various interfaces. The electronic device 201 may further include a storage device or medium such as a hard drive.

The sensor module 240 may measure physical quantity or sense an operating status of the electronic device 201, and then convert the measured or sensed information into electric signals. The sensor module 240 may include, for example, at least one of a gesture sensor 240A, a gyro sensor 240B, a pressure sensor 240C (e.g., barometer), a magnetic sensor 240D, an acceleration sensor 240E, a grip sensor 240F, a proximity sensor 240G, a color sensor 240H (e.g., red, green, blue (RGB) sensor), a biometric sensor 2401, a temperature-humidity sensor 240J, an illumination sensor 240K (e.g., illuminance/light), and a ultraviolet (UV) sensor 240M. Additionally or alternatively, the sensor module 240 may include, e.g., an E-nose sensor, an electromyography (EMG) sensor, an electroencephalogram (EEG) sensor, an electrocardiogram (ECG) sensor, an infrared (IR) sensor, an iris scan sensor, or a finger scan sensor. Also, the sensor module 240 may include a control circuit for controlling one or more sensors equipped therein.

The input device 250 may include various input circuitry, such as, for example, and without limitation, a touch panel 252, a digital pen sensor 254, a key 256, or an ultrasonic input unit 258. The touch panel 252 may recognize a touch input in a manner of capacitive type, resistive type, infrared type, or ultrasonic type. Also, the touch panel 252 may further include a control circuit. In the case of a capacitive type, a physical contact or proximity may be recognized. The touch panel 252 may further include a tactile layer. In this case, the touch panel 252 may offer a tactile feedback to a user.

The digital pen sensor 254 may be formed in the same or similar manner as receiving a touch input or by using a separate recognition sheet. The key 256 may include, for example, a physical button, an optical key, or a keypad. The ultrasonic input unit 258 is a specific device capable of identifying data by sensing sound waves with a microphone 288 in the electronic device 201 through an input tool that generates ultrasonic signals, thus allowing wireless recognition. According to an embodiment of the present disclosure, the electronic device 201 may receive a user input from another external device connected thereto through the communication module 220.

The display 260 may include a panel 262, a hologram 264, or a projector 266. The panel 262 may be, for example, liquid crystal display (LCD), active matrix organic light emitting diode (AM-OLED), etc. The panel 262 may have a flexible, transparent, or wearable form. The panel 262 may be formed of a single module with the touch panel 252. The hologram 264 may show a stereoscopic image in the air using interference of light. The projector 266 may project an image onto a screen, which may be located at the inside or outside of the electronic device 201. According to an embodiment of the present disclosure, the display 260 may further include a control circuit for controlling the panel 262, the hologram 264, and the projector 266.

The interface 270 may include various interface circuitry, such as, for example, and without limitation, a high-definition multimedia interface (HDMI) 272, an universal serial bus (USB) 274, an optical interface 276, or a D-subminiature (D-sub) 278. The interface 270 may be contained, for example, in the communication module 220. Additionally or alternatively, the interface 270 may include, for example, a mobile high-definition link (MHL) interface, an SD card/ multi-media card (MMC) interface, or an Infrared Data Association (IrDA) interface.

The audio module 280 may perform a conversion between sounds and electric signals. The audio module 280 may process sound information input or output through a speaker 282, a receiver 284, an earphone 286, or the microphone 288.

The camera module 291 is a device capable of obtaining still images and moving images. According to an embodiment of the present disclosure, the camera module 291 may include at least one image sensor (e.g., a front sensor or a rear sensor), a lens, an image signal processor (ISP), or a flash (e.g., light emitting diode (LED) or xenon lamp).

The power management module 295 may manage the electric power of the electronic device 201. The power management module 295 may include, for example, a power management integrated circuit (PMIC), a charger IC, or a battery gauge.

The PMIC may be formed, for example, as an IC chip or SoC. Charging may be performed in a wired or wireless manner. The charger IC may charge a battery 296, and prevent overvoltage or overcurrent from a charger. According to an embodiment of the present disclosure, the charger IC may have a charger IC used for at least one of wired and wireless charging types. A wireless charging type may include, for example, a magnetic resonance type, a magnetic induction type, or an electromagnetic type. Any additional circuit for a wireless charging may be further used such as a coil loop, a resonance circuit, or a rectifier.

The battery gauge may measure the residual amount of the battery 296 and a voltage, current, or temperature in a charging process. The battery 296 may store or create electric power therein and supply electric power to the electronic device 201. The battery 296 may be, for example, a rechargeable battery or a solar battery.

The indicator 297 may show thereon a current status (e.g., a booting status, a message status, or a recharging status) of the electronic device 201 or of its part (e.g., the application processor 210). The motor 298 may convert an electric signal into a mechanical vibration. The electronic device 201 may include a specific processor (e.g., GPU) for supporting a mobile TV. This processor may process media data that comply with standards of digital multimedia broadcasting (DMB), digital video broadcasting (DVB), or media flow.

Each of the above-discussed elements of the electronic device disclosed herein may be formed of one or more components, and its name may be varied according to the type of the electronic device. The electronic device disclosed herein may be formed of at least one of the above-discussed elements without some elements or with additional elements. Some of the elements may be integrated into a single component that still performs the same functions as those of such elements before being integrated.

The term "module" used in this disclosure may refer to a certain unit that includes one of hardware, software, and firmware, or any combination thereof. The term "module" may be interchangeably used with the terms "unit", "logic", "logical block", "component", or "circuit". The module may be the minimum unit, or part thereof, which performs one or more particular functions. The module may be formed mechanically or electronically. For example, the module disclosed herein may include at least one of a dedicated processor, a central processing unit (CPU), an application specific integrated circuit (ASIC) chip, field programmable gate array (FPGA), and programmable-logic device, which have been known or are to be developed in the future.

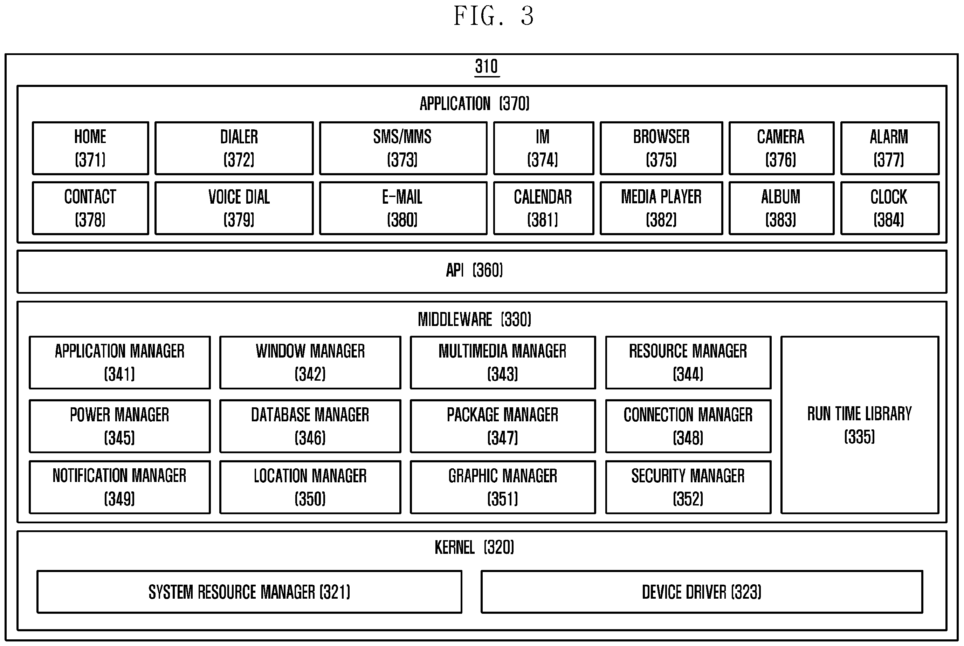

FIG. 3 is a block diagram illustrating a programming module 310.

The programming module 310 may be included (or stored) in the electronic device 201 or may be included (or stored) in the electronic device 101. At least a part of the programming module 310 may be implemented in software, firmware, hardware, or a combination of two or more thereof. The programming module 310 may be implemented in hardware, and may include an OS controlling resources related to an electronic device and/or various applications executed in the OS. For example, the OS may be Android™, iOS™, Windows™, Symbian™, Tizen™, Bada™, etc.

Referring to FIG. 3, the programming module 310 may include a kernel 320, a middleware 330, an API 360, and/or the applications 370.

The kernel 320 may include a system resource manager 321 and/or a device driver 323. The system resource manager 321 may include, for example, a process manager, a memory manager, and a file system manager. The system resource manager 321 may perform the control, allocation, recovery, etc. of system resources. The device driver 323 may include, for example, a display driver, a camera driver, a Bluetooth driver, a shared memory driver, a USB driver, a keypad driver, a WiFi driver, and/or an audio driver. Also, according to an embodiment of the present disclosure, the device driver 323 may include an inter-process communication (IPC) driver.

The display driver may control at least one display driver IC (DDI). The display driver may include the functions for controlling the screen according to the request of the applications 370.

The middleware 330 may include multiple modules previously implemented to provide a function used in common by the applications 370. Also, the middleware 330 may provide a function to the applications 370 through the API 360 in order to enable the applications 370 to efficiently use limited system resources within the electronic device. The middleware 330 may include at least one of a runtime library 335, an application manager 341, a window manager 342, a multimedia manager 343, a resource manager 344, a power manager 345, a database manager 346, a package manager 347, a connection manager 348, a notification manager 349, a location manager 350, a graphic manager 351, a security manager 352, and any other suitable and/or similar manager.

The runtime library 335 may include, for example, a library module used by a complier, in order to add a new function by using a programming language during the execution of the applications 370. The runtime library 335 may perform functions which are related to input and output, the management of a memory, an arithmetic function, etc.

The application manager 341 may manage, for example, a life cycle of at least one of the applications 370. The window manager 342 may manage GUI resources used on the screen. For example, when at least two displays 260 are connected, the screen may have a different configuration or may be managed in response to the ratio of the screen or the action of the applications 370. The multimedia manager 343 may detect a format used to reproduce various media files, and may encode or decode a media file through a codec appropriate for the relevant format. The resource manager 344 may manage resources, such as source code, a memory, a storage space, etc. of at least one of the applications 370.

The power manager 345 may operate together with a basic input/output system (BIOS), may manage a battery or power, and may provide power information, etc. used for the operation of the electronic device. The database manager 346 may manage a database in such a manner as to enable the generation, search, and/or change of the database to be used by at least one of the applications 370. The package manager 347 may manage the installation and/or update of an application distributed in the form of a package file.

The connection manager 348 may manage the wireless connection such as, for example, WiFi and Bluetooth. The notification manager 349 may display or report, to the user, an event such as an arrival message, an appointment, a proximity alarm, etc. in such a manner as not to disturb the user. The location manager 350 may manage location information of the electronic device. The graphic manager 351 may manage a graphic effect, which is to be provided to the user, and/or a user interface related to the graphic effect. The security manager 352 may provide various security functions used for system security, user authentication, etc. When the electronic device 201 has a telephone function, the middleware 330 may further include a telephony manager for managing a voice telephony call function and/or a video telephony call function of the electronic device.

The middleware 330 may generate and use a new middleware module through various functional combinations of the above-described internal element modules. The middleware 330 may provide modules specialized according to the type of the OS in order to provide differentiated functions. Also, the middleware 330 may dynamically delete some of the existing elements, or may add new elements. Accordingly, the middleware 330 may omit some of the elements described, may further include other elements, or may replace some of the elements with elements, each of which performs a similar function and has a different name.

The API 360 is a set of API programming functions, and may be provided with a different configuration according to the type of the OS. In the case of Android or iOS, for example, one API set may be provided to each platform. In the case of Tizen, for example, two or more API sets may be provided to each platform.

The applications 370 may include, for example, a preloaded application and/or a third party application. The applications 370 may include, for example, a home application 371, a dialer application 372, a short message service (SMS)/multimedia message service (MMS) application 373, an instant message (IM) application 374, a browser application 375, a camera application 376, an alarm application 377, a contact application 378, a voice dial application 379, an electronic mail (e-mail) application 380, a calendar application 381, a media player application 382, an album application 383, a clock application 384, and any other suitable and/or similar application.

At least a part of the programming module 310 may be implemented by instructions stored in a non-transitory computer-readable storage medium. When the instructions are executed by one or more processors (e.g., the application processor 210), the one or more processors may perform functions corresponding to the instructions. The non-transitory computer-readable storage medium may be, for example, the memory 230. At least a part of the programming module 310 may be implemented (e.g., executed) by, for example, the one or more processors. At least a part of the programming module 310 may include, for example, a module, a program, a routine, a set of instructions, and/or a process for performing one or more functions.

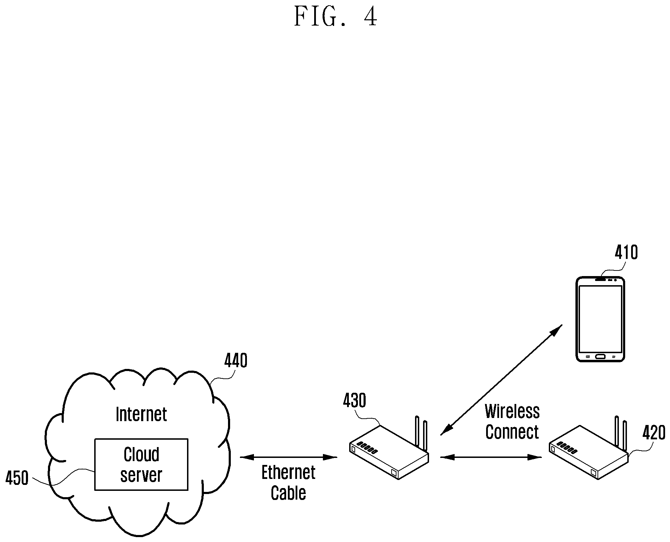

FIG. 4 is a diagram of a network configuration including an access point (AP) and an electronic device according to various examples.

Referring to FIG. 4, the network may be implemented by at least a part of an electronic device 410, a first access point 430, and a second access point 420.

The first access point 430 may be connected to the Internet440 (or packet data network (PDN)) through an Ethernet cable, and another device (e.g., electronic device 410 or second access point 420) may be wirelessly connected to the first access point 430 to access the Internet 440. The wireless connection method between the first access point 430 and other devices is a known short-range communication method, and may be a wireless LAN. According to various examples, since the first access point 430 is connected to the Ethernet cable, it may be deployed at a fixed indoor location.

Like the first access point 430, the second access point 420 can be wirelessly connected to another electronic device 410, and may also be connected to the first access point 430 wirelessly or by wire. For example, if the electronic device 410 is wirelessly connected to the second access point 420, data that is transmitted from the electronic device 410 to the second access point 420 may be transmitted from the second access point 420 to the Internet 440 through the first access point 430. That is, the second access point 420 may relay data between the electronic device 410 and the Internet 440. According to various examples, if the second access point 420 is wirelessly connected to the first access point 430, it may wirelessly communicate with another device, such as the first access point 430, but its location is not limited thereto. The second access point 420 may include a connector to be connected to another device by wire, and may connect to the first access point 430 by wire. Further, the second access point 420 may be directly connected to a network through the Ethernet cable without the first access point 430.

The electronic device 410 is a known portable electronic device, and may include a smart phone or a tablet PC. The electronic device 410 may include at least a part of the configuration and/or function of the electronic device 101 and/or the electronic device 201.

The electronic device 410 may access the first access point 430 or the second access point 420 in order to access the Internet 440. For example, the electronic device 410 may access any one of the first access point 430 and the second access point 420 in consideration of the signal strength, the number of accessed devices, or a predetermined priority.

According to the present disclosure, the electronic device 410 may include at least one sensor capable of sensing information on the location or movement of the electronic device 410. For example, the electronic device 410 may include at least one of a gyroscopic sensor, a geomagnetic sensor, an acceleration sensor, and a digital compass. The electronic device 410 may determine the movement distance and direction during the location movement of the electronic device 410 using the sensing value of the sensor, and also determine existence and nonexistence of a wall adjacent to the electronic device 410.

The electronic device 410 may sense a signal that is transmitted to or, as according to the invention, received from the first access point 430 at a specific location, and determines a value (e.g., first value) related to the communication state from the corresponding signal. For example, the value related to the communication state may include an RSSI or a link speed. The electronic device 410 predicts, from the value related to the communication state, a value (e.g., second value) related to the communication states of the first access point 430 and the second access point 420 in the case where the second access point 420 is deployed at the corresponding location. The electronic device 410 determines whether positioning of the second access point 420 at the corresponding location is suitable using the predicted value, and by repeatedly performing the same process at several locations, the electronic device 410 may determine whether deployment of the second access point 420 at several locations is suitable, and may provide the result of the determination to a user. According to the present disclosure, the electronic device 410 may install and execute an application for determining an optimal location of the second access point 420. For example, the electronic device 410 may receive the application from a server 450, and may provide a graphic user interface including information on whether deployment of the second access point 420 is suitable at several locations using the application.

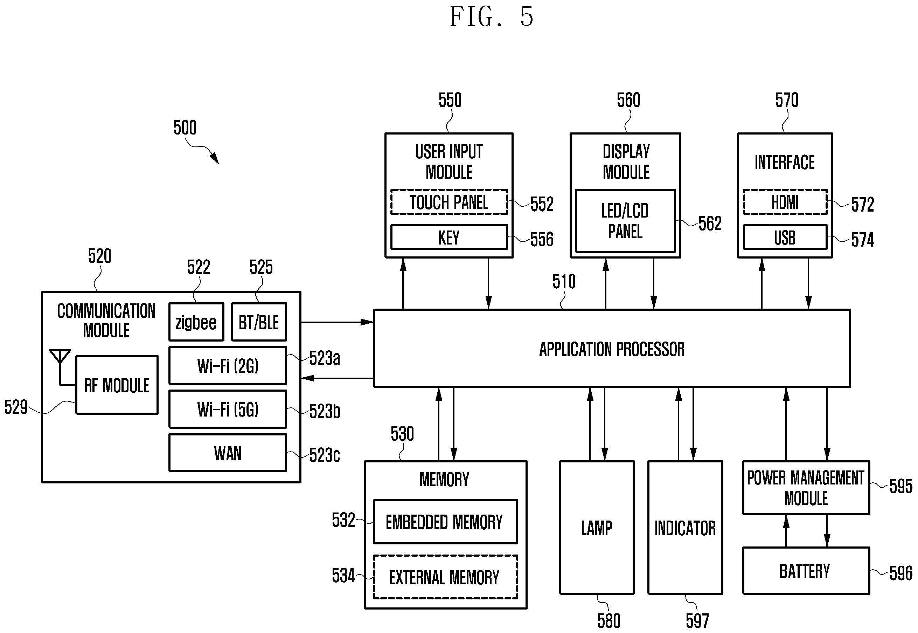

FIG. 5 is a block diagram of an access point according to various examples.

Referring to FIG. 5, a first access point 500 may include an application processor 510, a communication module 520, a memory 530, a user input module 550, a display module 560, an interface 570, a lamp 580, a power management module 595, a battery 596, and an indicator 597, and at least a part of the configurations may be omitted or replaced.

The application processor 510 may execute a control of at least one other element of the first access point 500 and/or an operation or data process related to communication.

The communication module 520 is configured to wirelessly communicate with the electronic device 410 and the second access point 420, and the communication module 520 may include respective software and/or hardware modules performing communication, such as an RF module 529, Zigbee 522, Bluetooth/Bluetooth low energy (BT/BLE) 525, WiFi 2G 523a,WiFi 5G 523b, and WAN 523c.

The user input module 550 may include a touch panel 552 and a key 556 to receive a user's input.

The display module 560 may include an LED/LCD panel 562 and a control circuit for controlling the LED/LCD panel 562.

The interface 570 may support a wired connection to an external device, such as a HDMI 572 and a USB 574. The interface 570 may include a port for being connected to the Ethernet cable.

The memory 530 may include an embedded memory 532 and an external memory 534, and may be electrically or functionally connected to the application processor 510 through various interfaces.

The lamp 580 may emit specific light in accordance with a signal transmitted from the application processor 510.

The indicator 597 may indicate a specific state (e.g., booting state or charging state) of the first access point 500.

The power management module 595 may manage the power of the first access point 500, and may manage the charging state of the battery 596 and the connection state of a regular power supply (e.g., a power adapter).

Since the second access point has the same configuration as that of the first access point 500 or includes at least a part thereof, the explanation thereof will be omitted.

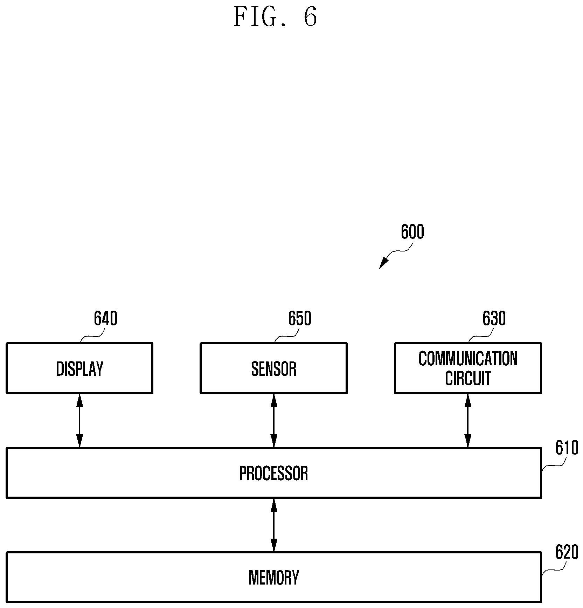

FIG. 6 is a block diagram of an electronic device according to various embodiments of the present disclosure.

Referring to FIG. 6, an electronic device 600 according to various embodiments of the present disclosure includes a processor 610, a memory 620, a communication circuit 630, a display 640, and a sensor 650. Even if a part of the configuration is omitted or replaced, various embodiments of the present disclosure could still be implemented. Further, the electronic device 600 may include at least a part of the configuration and/or function of the electronic device 101 and/or the electronic device 201. Technical features for determining a location suitable for installation of the second access point 420 among the configurations of the electronic device 600 and functions performed by the respective configurations will be described in detail.

According to various embodiments of the present disclosure, the display 640 displays an image, and may be implemented by any one of an LCD, an LED display, an organic light-emitting diode (OLED) display, a micro electromechanical system (MEMS) display, and an electronic paper display, but is not limited thereto. The display 640 may include at least a part of the configuration and/or function of the display 160 and/or the display 260.

According to various embodiments of the present disclosure, the communication circuit 630 is configured to transceive data to and/or from various external electronic devices (e.g., the first access point 430), and may include at least a part of the configuration and/or function of the communication interface 170 and/or the communication module 220.

According to various embodiments of the present disclosure, the sensor 650 may include at least one sensor capable of sensing information on the location or movement of the electronic device 600. For example, the sensor 650 may include at least one of a gyroscopic sensor, a geomagnetic sensor, an acceleration sensor, and a digital compass. The sensing value of the sensor 650 is provided to the processor 610, and the processor 610 may determine the movement distance and direction during the location movement of the electronic device 600 using the sensing value of the sensor 650 and may also determine existence and/or nonexistence of a wall adjacent to the electronic device 600.

According to various embodiments of the present disclosure, the processor 610 is configured to control the respective elements of the electronic device 600 and/or an operation or data process related to communication, and may include at least a part of the configuration and/or function of the first processor 120 and/or the application processor 210. The processor 610 may be electrically connected to internal elements of the electronic device, such as the display 640, the communication circuit 630, the sensor 650, and the memory 620.

The memory 620 may store digital data either temporarily or permanently, and may include at least one of the configuration of the memory 130 and/or the memory 230. The memory 620 may include a volatile memory and a nonvolatile memory. The nonvolatile memory may include at least one of a OTPROM, a PROM, an EPROM, an EEPROM, a mask ROM, a flash ROM, a flash memory (e.g., NAND flash or NOR flash), a hard drive, and a SSD. The volatile memory may include at least one of a DRAM, a SRAM, and a SDRAM.

The memory 620 may store therein various instructions that can be performed by the processor 610. Such instructions may include control commands, such as arithmetic and logical operations, data movement, and input/output, that can be recognized by the processor 610, and may be defined on a framework stored in the memory 620. Further, the memory 620 may store at least a part of the programming module 310.

A function for grasping a location suitable for installation of the second access point will be hereinafter described in more detail. The operations of the processor 610 that will be described later may be performed through loading of the instructions stored in the memory 620 as described above.

According to various embodiments of the present disclosure, the communication circuit 630 may sense a signal output from the first access point in a state where the electronic device 600 is separated from the first access point.

According to various embodiments of the present disclosure, the processor 610 acquires a first value from the signal sensed by the communication circuit 630. For example, the first value may be an RSSI. Further, the first value may include at least one of a packet delivery rate (PDR), a signal to noise ratio (SNR), a bit error rate (BER), an Eb/No link speed, a TCP/IP packet, and a MAC/physical packet throughput.

According to various embodiments of the present disclosure, the processor 610 determines, from the first value, a second value that is different from the first value. As described above, the first value is a value related to the state of the signal that is received from the first access point positioned at a location to which the communication circuit 630 of the electronic device 600 is fixed. The second value is a value for the second access point to predict the state of the signal that can be received from the first access point when the second access point is positioned at the same location as that of the electronic device 600 in the case where the communication circuit 630 of the electronic device 600 receives the signal of the first value at the specific location. The processor 610 may predict the state of the signal that can be received by the second access point based on the signal received from the communication circuit 630 of the electronic device 600.

According to various embodiments of the present disclosure, an electronic device exists to determine the second value. The processor 610 determines the second value based on the first value acquired in a predetermined table. The table is predetermined corresponding to the electronic device 600 and the second access point.

According to an embodiment of the present disclosure, the processor 610 may acquire the second value by adding a selected value to the first value. Here, the selected value may be a value for compensating for a difference in communication quality between the electronic device 600 and the second access point according to the result of pre-experiments. For example, the second access point may perform a function of connecting the electronic device 600 to the Internet in a short-range communication network, and it has superior hardware performance through an antenna, etc. In contrast, the electronic device 600 may use an embedded antenna in consideration of the portability and design, and thus the antenna performance thereof may be lower than that of the second access point. For example, the RSSI of the second access point, which is received at the same location from the first access point fixed location, may be higher than that of the electronic device 600 by 3 dbm.

According to an embodiment of the present disclosure, the processor 610 may determine a modulation coding scheme (MCS) index based at least partly on the second value, and it may determine throughput based at least partly on the determined MCS index.

According to the invention, the processor 610 compares the acquired second value with a predetermined threshold value, and the processor 610 determines whether the current location is suitable for the second access point to be wirelessly linked to the first access point based at least partly on the result of the comparison. For example, if the second value is larger than the threshold value, the processor 610 may determine that the current location of the electronic device 600 is suitable for positioning the second access point. The threshold value is a value of the same kind (or unit) as that of the second value, and it may be determined as the minimum value required by the second access point for smooth wireless communication with the first access point. The threshold value may be determined in accordance with the second access point.

According to various embodiments of the present disclosure, the electronic device 600 may determine whether it is suitable to position the second access point at a plurality of locations. For example, after the electronic device 600 at the first location determines whether the first location is suitable for positioning the second access point through the sensing of the signal transmitted from the first access point, first value acquisition, second value acquisition, and comparison with the threshold value as described above, the processor 610 may guide a user to move to another location through the display 640. If the user moves the electronic device to the second location, the electronic device 600 may determine the relative location of the second location against the first location through the measurement of the movement direction and distance using the sensor 650. The first location may be the location (or adjacent location) of the first access point. For example, the user of the electronic device 600 may move to another location to perform a measurement process after performing an initial measurement at the location of the first access point. In this case, the electronic device 600 may determine the relative location of the second location which has been moved against the location of the first access point.

According to an embodiment of the present disclosure, if it is possible to acquire map information of a space in which the electronic device 600 performs the measurement, the electronic device 600 can determine an absolute location (e.g., coordinates) on the map of the second location.

Thereafter, the electronic device 600 at the second location which has been moved may determine whether the second location is suitable for positioning the second access point through sensing of the signal transmitted from the first access point, first value acquisition, second value acquisition, and comparison with the threshold value. By repeating the above-described process, the electronic device 600 can determine whether it is suitable to position the second access point at a plurality of locations.

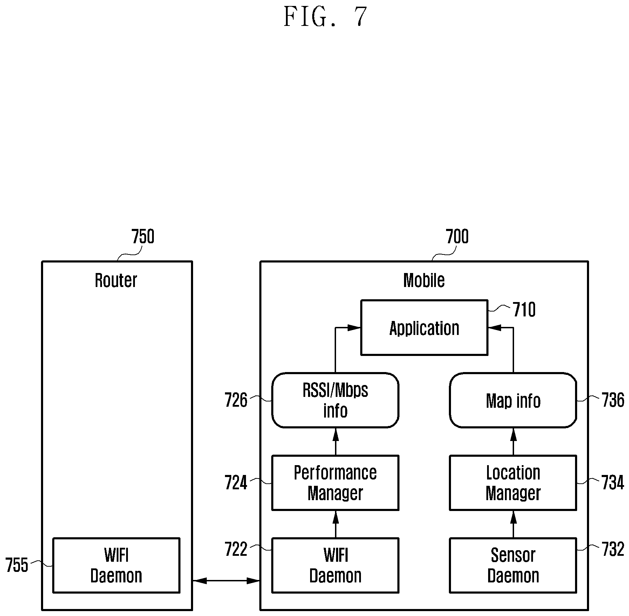

According to various embodiments of the present disclosure, the processor 610 may display whether it is suitable to install the second access point in at least one location on the display 640 based on the result of the measurement in the at least one location. For example, the processor 610 may acquire map information of the space in which the measurement has been performed, and may display whether it is suitable to position the second access point at the respective locations measured on the map and at the corresponding location. If the map information of the space in which the measurement has been performed is unable to be determined, the processor 610 may acquire a rough shape of the space in which the measurement has been performed using a map application or a server, and may display the measured location. If the external shape information of the space in which the electronic device is located is unable to be obtained, the processor 610 may display the location of the first access point and only the measured relative locations of the electronic device 600. Further the processor 610 may display the relative location of the electronic device 600 against the first access point in a pedestrian dead reckoning method. FIG. 7 is a diagram illustrating the software structure of a first access point and an electronic device according to various embodiments of the present disclosure.

Referring to FIG. 7, the respective software configurations of an electronic device 700 may be stored in a memory 620, and may be executed by a processor 610. According to an embodiment of the present disclosure, a WiFi daemon 722 and a sensor daemon 732 are performed in a kernel layer, a performance manager 724 and a location manager 734 are performed in a framework layer. RSSI information and throughput information (or Mbps) 726 and map information 736 may be provided to an application 710 through an API.

The WiFi daemon 722 of the electronic device 700 may communicate with a WiFi daemon 755 of the first access point 750, and may sense signals being transceived. The performance manager 724 may acquire the first value (e.g., RSSI) based on the sensed signal. The first value acquired by the performance manager 724 may be provided to the application through the API.

The sensor daemon 732 may acquire sensing values measured by the sensor 650) provided on the electronic device 700 to provide the acquired sensing values to the location manager 734. The location manager 734 may acquire location information of the electronic device 700 based on the sensing values, and may provide the acquired location information and/or indoor map information 736 to the application 710 through the API.

The application 710 may acquire a second value based on the received first value, and may determine whether the corresponding location is suitable for installing the second access point 420 through comparison of the second value with a threshold value. Further, the application 710 may display whether it is suitable to install the second access point at the at least one location on the display 640 based on the acquired location information of the electronic device 700 and/or indoor map information.

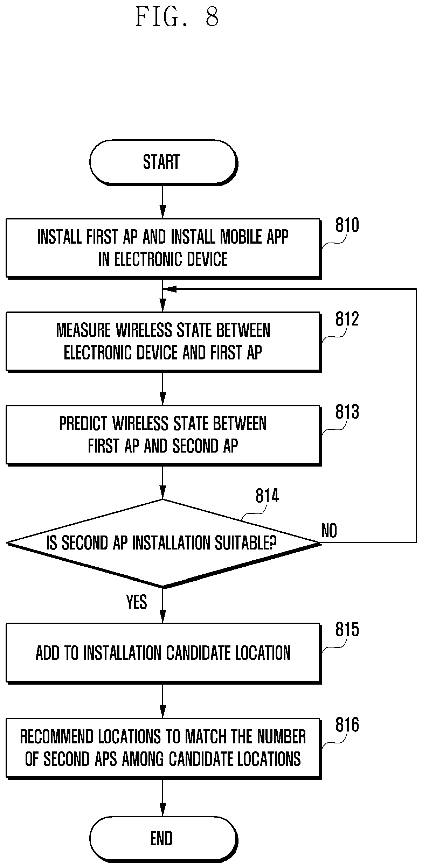

Hereinafter, a method for an electronic device to determine the location of the access point according to various embodiments and examples of the present disclosure will be described with reference to FIGS. 8 to 13, with reference to the electronic device as described above with reference to FIGS. 1 to 7.

FIG. 8 is a flowchart of a method of recommending a location of a second access point using an electronic device according to various embodiments and examples of the present disclosure.

According to of various embodiments and examples of the present disclosure, in step 810, a first access point 430 is installed indoors through an Ethernet cable, and an electronic device 410 may install an application 710 for displaying whether the location of a second access point 420 is suitable as described above. If the application is executed, it may determine, from a user, whether an access point (e.g., second access point) to be additionally installed exists, and if such an access point does not exist, it may switch to the existing application state screen, whereas if such an access point exists, it may switch to a screen for installing an additional access point.

A processor 610 of the electronic device may operate to transmit information on the installation of the additional access point to the first access point through a communication circuit 630. The first access point may output the information with visual effects (e.g., flickering of an LED lamp or displaying) or aural effects (e.g., regular alarm sound). The visual or aural effects of the first access point are to guide the user who holds the electronic device in hand to move near the location of the first access point, and if the distance between the first access point and the electronic device enters into a predetermined distance, such effects may be ended. At the same time, the processor may output a user interface for guiding an access to the first access point through the display 640.

If the electronic device enters into a location a predetermined distance from the first access point, the first access point may stop the output of the visual or aural effects as described above. According to the present disclosure, the first access point and/or the electronic device may determine that it has entered into the predetermined distance if an ultra high electric field based on the RSSI is determining (e.g., RSSI is greater than or equal to -30 dbm)

If the electronic device enters into the location the predetermine distance from the first access point, it may start the operation of the sensor 650 for determining the location information of the electronic device.

In step 812, the processor may measure the wireless state (e.g., the first value) with the first access point through the communication circuit 630. According to various embodiments of the present disclosure, the wireless state may include at least one of an RSSI, a PDR, an SNR, a BER, an Eb/No link speed, a TCP/IP packet, and a MAC/physical packet throughput. The electronic device may measure signals of all frequency bands (e.g., 2.4 GHz and 5 GHz) used for short-range communication. The electronic device may measure the wireless state through setting of a channel having the lowest interference among a plurality of channels in order to minimize an influence exerted by another device (e.g., another electronic device or another access point).

According to an embodiment of the present disclosure, the RSSI and the link speed can be determined through the RSSI value of a received beacon signal, and in the case of a large variation width of the RSSI value of the received beacon signal, they may be determined through obtaining of an average of the values measured for a predetermined time.

According to an embodiment of the present disclosure, in the case of measuring the TCP/IP packet throughput, the processor may measure the throughput by making the communication circuit periodically transmit packets generated by the application to the first access point. For example, the processor may determine the actual throughput value using a TCP/IP packet throughput performance measurement tool such as iPerf.

According to an embodiment of the present disclosure, the PDR may correspond to a packet transfer rate calculated by a MAC. For example, in the case of supporting a driver, a wireless LAN chip firmware, and a chip, the application layer may directly calculate the PDR.

According to an embodiment of the present disclosure, in the case of the BER, SNR, and Eb/No, the wireless LAN chip of the communication circuit may measure the corresponding value to be transferred.

In step 813, if the second access point is located at the current location, the processor may predict the wireless state between the first access point and the second access point. For this, the processor may generate the second value through correction of the acquired first value in consideration of the difference in wireless performance between the second access point and the electronic device.

According to an embodiment of the present disclosure, the processor may acquire the MCS index value, bandwidth, and existence and absence of short guard interval (SGI) through a physical layer. Since this value is a value that is determined in accordance with the channel state measured as the physical layer sends and receives request to send (RTS)/clear to send (CTS) beacons and data packets, it may be significantly determined to indicate the channel state. Specifically, in the MCS index value, spatial streams, modulation, coding rate value, bandwidth, and data rate value according to the SGI value are determined from the specifications. Such an MCS index table may be stored inside the wireless LAN chip of the communication circuit. The processor may acquire the wireless state measurement value (e.g., RSSI) measured on conditions of the determined MCS index value, bandwidth, and SGI value.

In step 814, the processor may determine whether the current location is a location suitable for installing the second access point. According to an embodiment of the present disclosure, the processor may convert the wireless state measurement value (e.g., first value) measured in step 812 into the second value, and if the second value is larger than the threshold value, the processor may determine that the current location is suitable for installing the second access point.

In step 815, the processor may add the current location to installation candidate locations if the current location is suitable as the result of the determination in step 814. Unlike this, if it is determined that the current location is not suitable for installing the second access point, the processor may notify the user that the current location is unsuitable through the display without adding the current location to the installation candidate locations.

The processor may repeatedly perform steps 812 to 815 at respective locations whenever the location of the electronic device moves to determine at least one installation candidate location, and then, in step 816, the processor may recommend a suitable location in consideration of the number of second access points to be installed among the candidate locations. According to an embodiment of the present disclosure, the processor may display a message for determining whether the new access point location is acceptable through the display, and then if the user moves to another location after selecting additional confirmation, the processor may perform again steps 812 to 815.

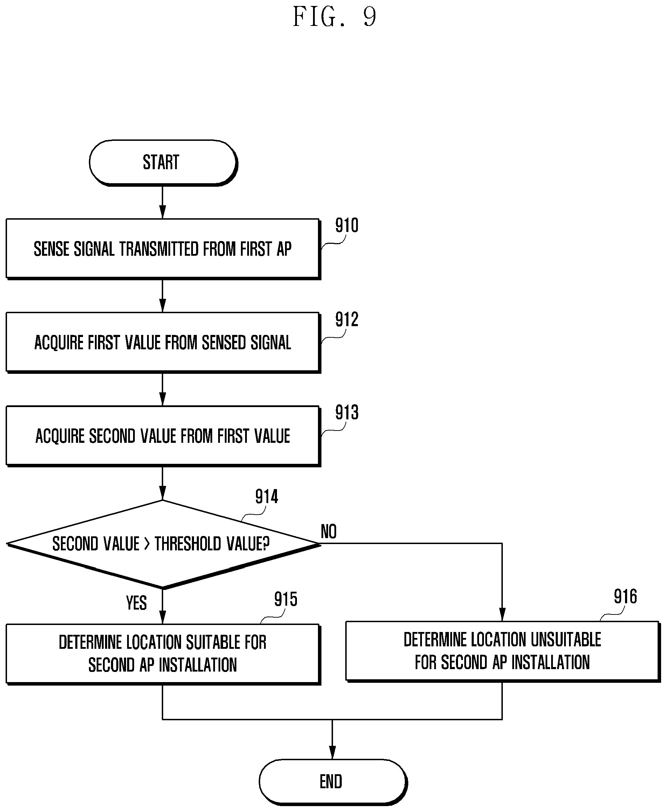

FIG. 9 is a flowchart of a method for an electronic device to determine the candidate locations based on a radio signal according to various embodiments of the present disclosure.

In step 910, the electronic device 410 of FIG. 4 senses a signal that is transmitted from the first access point 430 through the communication circuit 630.

In step 912, the processor 610 acquires the first value from the sensed signal. Here, the first value may include, for example, the RSSI value of the sensed signal.

In step 913, the processor acquires the second value from the first value. According to the invention, the step of acquiring the second value includes an operation of determining the second value that is mapped on the first value acquired in a predetermined table. Here, the table is predetermined corresponding to the electronic device and the second access point 420, and the electronic device may acquire the table through the server 450 or the second access point.

According to an embodiment of the present disclosure, the operation of acquiring the second value may include an operation of adding a selected value to the second value. For example, the second value may be calculated by adding the selected value to the first value measured by the electronic device based on the antenna performance of the second access point and the electronic device.

In step 914, the processor compares the acquired second value with the threshold value. According to an embodiment of the present disclosure, the operation of comparing the second value with the threshold value may include an operation of determining an MCS index based at least partly on the second value, an operation of determining throughput based at least partly on the determined MCS index, and an operation of comparing the determined throughput with a threshold value.

In step 915, if the second value is larger than the threshold value, the processor may determine the current location of the electronic device as the location suitable for installing the second access point.

In step 916, if the second value is less than or equal to the threshold value, the processor may determine that the current location of the electronic device is not suitable for installing the second access point.

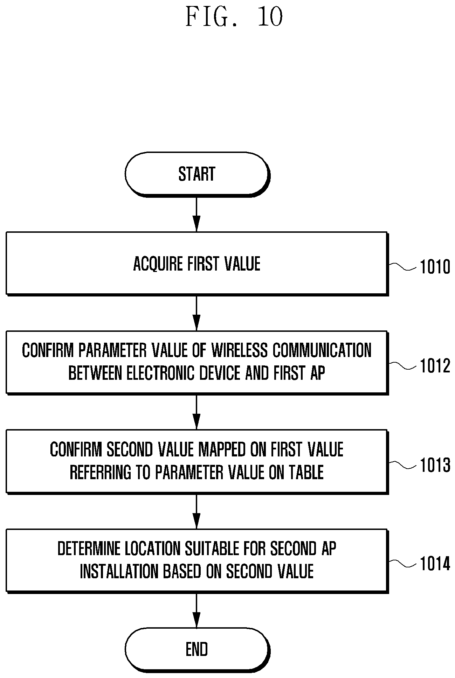

FIG. 10 is a flowchart of a method for an electronic device to determine a second value using a conversion table according to the invention.

In step 1010, the electronic device 410 or the processor 610 of the electronic device 600 acquire the first value from the signal sensed by the communication circuit 630. Here, the first value may include, for example, the RSSI value of the sensed signal.

In step 1012, the processor may determine parameter values of the wireless communication and identification information of the electronic device between the electronic device and the first access point 430. According to an embodiment of the present disclosure, the parameter values may include, for example, at least parts of MCS values, standard values, and SGI values, and the identification information of the electronic device may include a model name of the electronic device.

In step 1013, the processor determines the second value based on the first value acquired in a predetermined table. According to an embodiment of the present disclosure, the table is recorded through reflection of premeasured test values per model of the electronic device, and may be a table in which the expected communication states are mapped on each other in the case where the second access point 420 and the first access point communicate with each other in the same environment in a state where the electronic device indicates a specific communication state (e.g., RSSI) in the specified environment (or parameter value). For example, in the case with a specified model of the electronic device, if the RSSI is measured as -60 dbm in the environment in which MCS index 6, bandwidth 40 MHz and no SGI parameters are applied in the IEEE 802.11n standard, the RSSI of the second access point may be measured as -50 dbm in the same environment.

In step 1014, the processor determines whether it is suitable to install the second access point at the current location of the electronic device based on the second value.

Table 1 below indicates an example of the table as described above.

**Table 1**

| Mobile Model | Standard | MCS | Bandwidth | SGI | Mobile RSSI | AP RSSI | AP deployment |
|---|---|---|---|---|---|---|---|
| S7 | 11n | 6 | 40MHz | N | 0∼-40 dbm | 0∼-30 dbm | Y |
| | | | | | -40∼-50 dbm | -30∼-40 dbm | Y |
| | | | | | -50∼-60 dbm | -40∼-50 dbm | Y |
| | | | | | -60∼-70 dbm | -50∼-60 dbm | Y |
| | | | | | -70∼-80 dbm | -60∼-70 dbm | Y |
| | | | | | -80∼-90 dbm | -70∼-80 dbm | N |
| | | | | | -90∼-100 dbm | -80∼-90 dbm | N |
| | | | | | -100∼-110 dbm | -90∼-100 dbm | N |

Referring to Table 1, for example, if it is assumed that standard, MCS index, bandwidth, and SGI values are 11n, 6, 40 MHz, and No, respectively, the RSSI is measured as -70 dbm on the electronic device, and the second access point is deployed at the same location, the RSSI may be predicted as -60 dbm, and thus it may be determined that the corresponding location is suitable for installing the second access point. As another example, if it is assumed that the RSSI is measured as -90 dbm on the electronic device, and the second access point is deployed at the same location, the RSSI may be predicted as -80 dbm, and thus it may be determined that the corresponding location is not suitable for installing the second access point. In Table 1, since the threshold value is -70 dbm, the processor may determine the location suitable if the acquired second value (e.g., AP RSSI) is greater than or equal to -70 dbm, whereas the processor may determine the location is unsuitable if the acquired second value (e.g., AP RSSI) is less than -70 dbm.

The above described table may be prepared through mapping of respective electronic device models during manufacturing the second access point, and the electronic device may download the table through the second access point or the server (e.g., server 450). According to an embodiment of the present disclosure, the table may be updated periodically, if a new access point is added, or the electronic device requests such update.

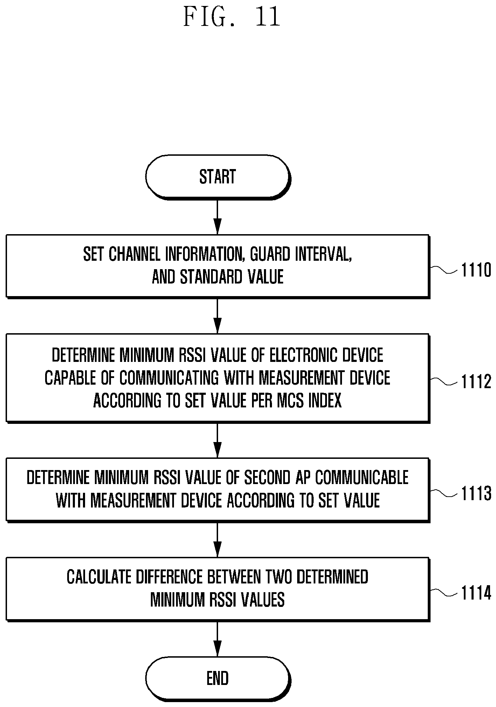

FIG. 11 is a flowchart of a method for an electronic device to determine a difference between a minimum RSSI value measured by an electronic device and an expected minimum RSSI value of a second access point according to various embodiments of the present disclosure.

The following operation may be performed by a specific measurement device during manufacturing the second access point in order to calculate a difference in minimum RSSI value between the electronic device 410 and the second access point 420. The measurement device may be a device that is the same as the first access point (or second access point) or a device having the same wireless communication performance (e.g., antenna performance).

In general, the size of a wireless LAN antenna used in the electronic device should be limited for miniaturization of the electronic device, and the antenna size may cause the occurrence of a difference between Rx gains in accordance with its volume, and thus may cause the occurrence of a difference in throughput between the antenna and the access point. If a difference between the Rx gain of the wireless LAN antenna of the electronic device and the Rx gain of the access point under the same condition is prerecorded, it becomes possible to predict the Rx gain of the second access point under the same condition through measurement of the Rx gain by the electronic device.

In step 1110, the measurement device may set channel information (e.g., bandwidth), guard interval (e.g., the size of a guard interval and existence and absence of a short guard interval (SGI)), and a standard value to be used during wireless communication with the electronic device and the second access point. After performing steps 1112 to 1114, the measurement device may repeatedly perform the steps 1112 to 1114 after setting of another channel information, guard interval, and standard value.

In step 1112, the measurement device may determine with the MCS index the minimum RSSI values of the electronic device that can communicate with the first access point in accordance with the set values (e.g., channel information, guard interval, and standard value). Here, the minimum RSSI value may mean the minimum value of the RSSI value between both devices for indicating specific throughput in the respective MCS indexes. According to an embodiment of the present disclosure, the measurement device may measure the minimum RSSI value while changing the MCS index value. Further, the measurement device may measure the minimum RSSI value during using of the respective MCS indexes by using several electronic devices (e.g., mobile electronic devices), and may obtain their average value.

In step 1113, the measurement device may determine the minimum RSSI value of the second access point that can communicate with the measurement device based on the set values (e.g., channel information, guard interval, or standard value). For example, the measurement device may determine the minimum RSSI value for the second access point and the measurement device to indicate specific throughput during using of the respective MCS indexes.

Table 2 below shows the minimum RSSI values obtain per MCS index as the result of measuring the wireless communication state of the measurement device and the electronic device. Since Table 2 is prepared based on IEEE 802.11(n), it may have a different bandwidth and a different data rate in the case of measurement in accordance with the different standard (e.g., in the case of IEEE 809.11ac, bandwidth values of 80 MHz and 160 MHz are included).

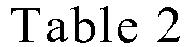

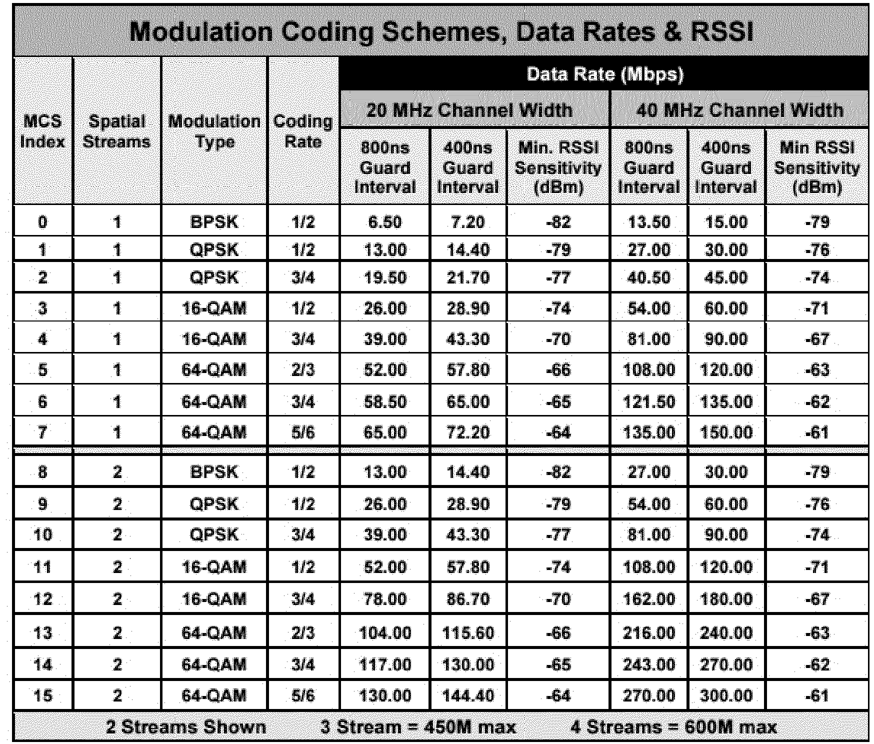

Table 3 below shows an example of an average throughput obtained per MCS index in wireless communication between the measurement device and the second access point.

**Table 3**

| MCS index | Throughput (Mbps) | | | |
|---|---|---|---|---|
| | 20MHz | | 40MHz | |
| | 800ns GI | 400ns GI | 800ns GI | 400ns GI |
| 0 | 4.55 | 5.04 | 9.45 | 10.5 |
| 1 | 8.4 | 9.1 | 18.9 | 21 |
| 2 | 13.65 | 13.65 | 28.35 | 31.5 |
| 3 | 18.2 | 18.2 | 37.8 | 42 |
| 4 | 27.3 | 27.3 | 56.7 | 63 |
| 5 | 36.4 | 36.4 | 75.6 | 84 |
| 6 | 40.6 | 40.95 | 84.7 | 94.5 |
| 7 | 45.5 | 45.5 | 94.5 | 105 |
| 8 | 9.1 | 9.1 | 18.9 | 21 |
| 9 | 18.2 | 18.2 | 37.8 | 42 |
| 10 | 27.3 | 27.3 | 56.7 | 63 |
| 11 | 36.4 | 36.4 | 75.6 | 84 |
| 12 | 54.6 | 54.6 | 113.4 | 126 |
| 13 | 72.8 | 72.8 | 151.2 | 168 |
| 14 | 81.9 | 81.9 | 170.1 | 189 |
| 15 | 91 | 91 | 189 | 210 |

In step 1114, the measurement device may obtain a difference between the average minimum RSSI value determined in step 1112 and the minimum RSSI value determined in step 1113.

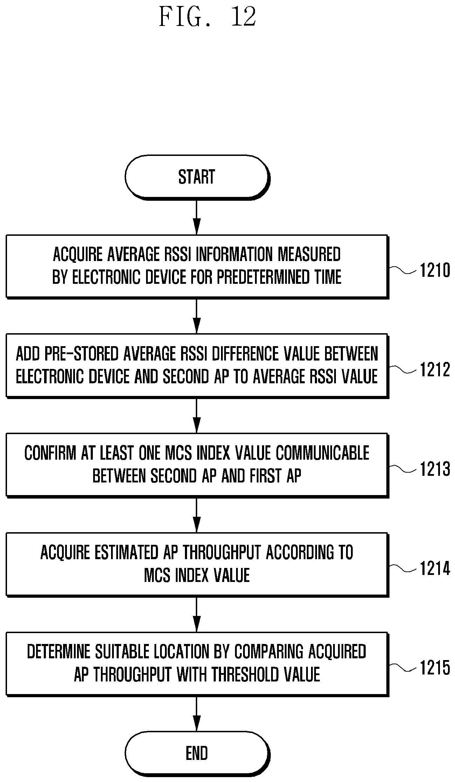

FIG. 12 is a flowchart of a method for an electronic device to obtain an expected throughput through reflection of a difference between calculated minimum RSSI values and to determine whether each location is a suitable location according to various embodiments of the present disclosure.

The following operation is an operation in which an electronic device 410 determines whether the current location is suitable for installing the second access point 420 based on a difference value between the minimum RSSI values per MCS index measured as taught in steps 1110 to 1114.

In step 1210, the communication circuit 630 of the electronic device may perform communication with the first access point 430 for a predetermined time. The processor 610 of the electronic device may acquire average RSSI information measured for the corresponding time. According to an embodiment of the present disclosure, the processor may acquire the average RSSI information in the respective MCS index through sequential adjustment of the MCS indexes.

According to an embodiment of the present disclosure, in order to communicate with the first access point through the wireless LAN chip, the electronic device may match the setting of the respective MCSs through sharing of the MCS information. For example, the processor may acquire the MCS information of the wireless LAN chip in the communication circuit 630. In the case of a specific electronic device, the authority for the application to acquire the MCS information of the wireless LAN chip may be blocked. If the processor is unable to acquire the MCS information directly from the wireless LAN chip, the processor may acquire the MCS information from an external server that has acquired the MCS information from the first access point.

In step 1212, the processor may add the pre-stored difference value to the average RSSI between the electronic device and the second access point to the average RSSI value. Here, the added RSSI difference value may be a value measured by the measurement device as described above in steps 1110 to 1114 in the manufacturing process of the access point (or electronic device). For example, if the average value of the minimum RSSI value measured by the electronic device is -82 dbm and the average value of the minimum RSSI value measured by the access point is -79 dbm in MCS index 0, the difference in minimum RSSI value between the electronic device and the second access point in MCS index 0 may be defined as 3 dbm.

In step 1213, the processor may determine at least one MCS index value capable of communicating between the second access point and the first access point. For example, if the minimum RSSI value measured in step 1210 is -82 dbm and the difference value between the minimum RSSIs pre-measured by the measurement device is 3 dbm, the minimum RSSI value of the second access point at the corresponding location may be estimated as -79 dbm. The processor may find the MCS index that exceeds the minimum RSSI based on the information (e.g., comparative Table 2) on the MCS index and the minimum RSSI value based on the estimated -79 dbm.

Referring to Table 2, for example, the second access point can determine that MCS indexes that satisfy the minimum RSSI value of -79 dbm are 1 and 9.

According to an embodiment of the present disclosure, the electronic device and the second access point may have different channel information (e.g., bandwidth). For example, if the electronic device supports up to IEEE 802.11(g) that is the standard using only 20 MHz bandwidth, it may measure the RSSI information only in 20 MHz bandwidth. In contrast, if the second access point device supports up to IEEE 802.11(n) that is the standard using both 20 MHz and 40 MHz bandwidths, the electronic device may consider the RSSI information in both the 20 MHz and 40 MHz bandwidths.

For example, in step 1210, if the minimum RSSI value measured by the electronic device at 20 MHz bandwidth is -82 dbm, the minimum RSSI value that is expected by the second access point at the 20 MHz bandwidth may be -79 dbm. Since the second access point can use 40 MHz, it can be determined that the MCS indexes that satisfy -70 dbm are 0 and 8 in the case of using 40 MHz in Table 2.

In step 1214, the processor may acquire the throughput estimated in accordance with the determined MCS index value. Referring to Table 3, if MCS index 1 is selected (e.g., if the second access point has one antenna), the throughput may be expected to be 8.4 Mbps in an environment in which the bandwidth is 20 MHz and the SGI value is 800 ns.

In step 1215, the processor may determine whether the corresponding location is suitable for installing the second access point through comparison of the acquired throughput with a threshold value. For example, if the expected throughput is larger than the threshold value, the processor may determine that the location is suitable, whereas if the throughput is less than or equal to the threshold value, the processor may determine that the location is not suitable.

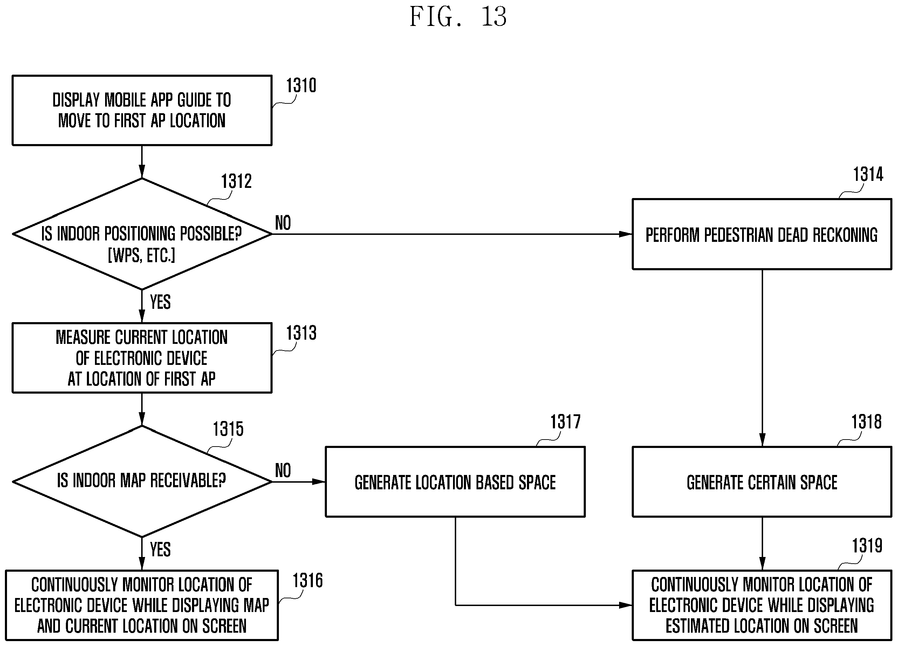

FIG. 13 is a flowchart of a method for an electronic device to provide information on whether each location is a suitable location of an access point according to various embodiments of the present disclosure.

In step 1310, the electronic device may display a guide for guiding the electronic device to move to the location of the first access point 430 on the display 640 through the application.

In step 1312, the processor 610 may determine whether indoor positioning is possible. According to an embodiment of the present disclosure, if the indoor positioning is possible, the electronic device may measure the current location, whereas if the indoor positioning is not possible, the electronic device may determine a relative location based on the change of the sensor value.

If the indoor positioning is possible, in step 1313, the processor at the position of the first access point may measure the current location (e.g., latitude and longitude) of the electronic device using the sensing value. The measurement value may be a reference value for determining the location of the electronic device during movement of the electronic device.

In step 1315, the processor may determine whether an indoor map can be acquired.

In step 1316, if the indoor map can be acquired, the processor displays the indoor map on the display, determines whether it is suitable to install the second access point at the current location, and then displays this at a location on the indoor map.

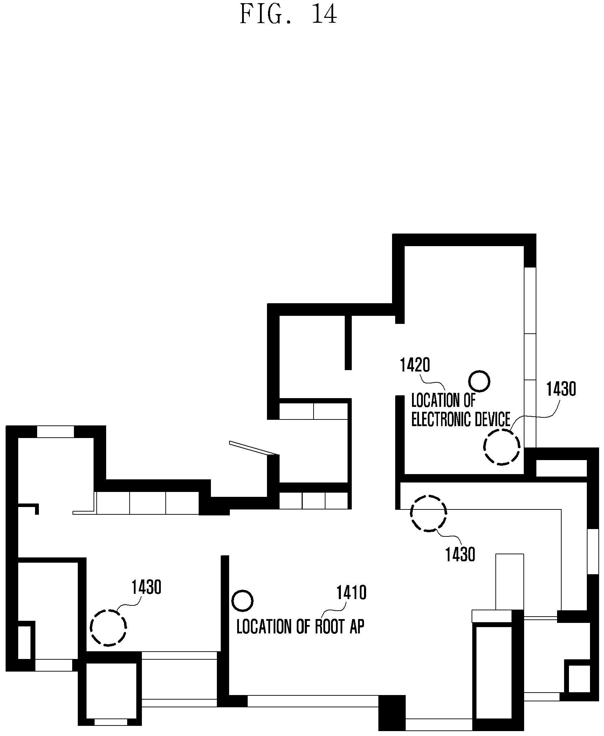

According to an embodiment of the present disclosure, the location of the electronic device displayed on the indoor map is illustrated in FIG. 14. The processor may also display an installation candidate (e.g., location adjacent to an outlet) of the second access point on the indoor map. As illustrated in FIG. 14, the processor may display on the indoor map the location 1410 of the first access point, the location of the electronic device 1420 being currently measured, and at least one installation candidate 1430.

If acquisition of the indoor map is not possible, in step 1317, the processor may generate indoor space information in which the electronic device is located, and may display the location of the electronic device. For example, the processor may acquire a rough indoor shape using the application or the server, and may display the measured location.

According to an embodiment of the present disclosure, the processor may draw a certain virtual building shape around the location of the first access point and the locations of the first access point and the electronic device. The building shape may be extended to a size in which the measured locations can be drawn. For example, under the assumption that the location (e.g., latitude and longitude) of the first access point is in the center of the building, it is possible to consider the latitude difference as a vertical length and to consider the longitude difference as a horizontal length based on the location of the electronic device. If the differences are measured as about 0.2 sec and 0.1 sec as the result of the measurement, the lengths correspond to 7.4 M and 3.7 M. Accordingly, if the size of a UI to be displayed by the application of the electronic device is 800×480, the electronic device may be displayed on a reduced scale so that it is located at a location in 3.7 M that is the longitude difference of 384 that is 80% of the small length 480 and 7.4 M that is the latitude difference of 640 that is 80% of the long length 800 of the UI size. In addition, the scale that is shown on the screen if the user enlarges or reduces the UI size may differ.

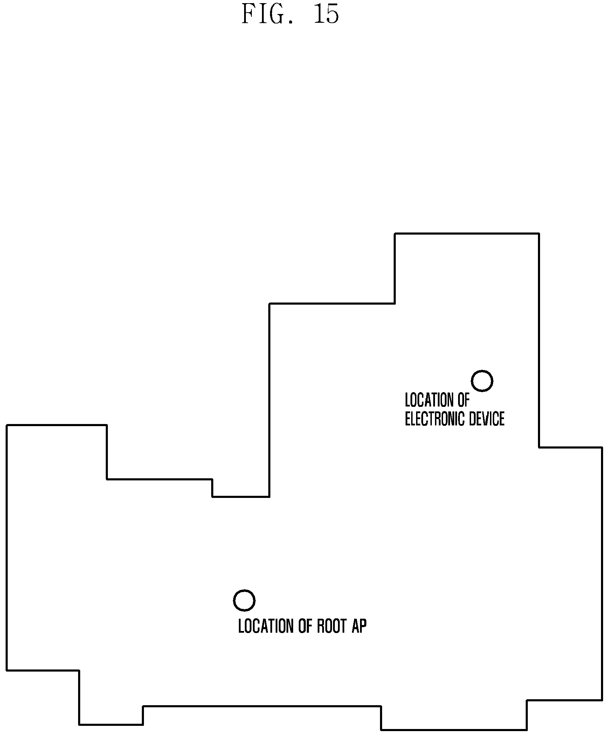

According to an embodiment of the present disclosure, the location of the electronic device is displayed through acquisition of the rough indoor shape is illustrated in FIG. 15. If the external shape information of the space in which the electronic device is located is unable to be obtained, the processor may only display the location of the first access point and the measured relative locations of the respective electronic device.

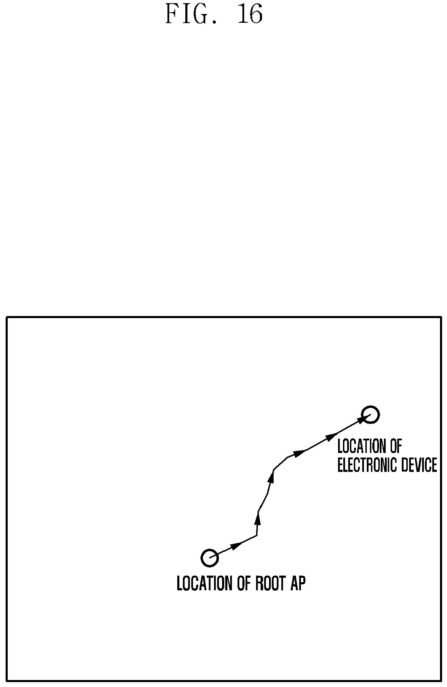

On the other hand, if indoor positioning is not possible in step 1312, the processor may perform pedestrian dead reckoning in step 1314. For example, using the pedestrian dead reckoning, the processor may create an arbitrary space map in step 1318 and acquire relative locations to the current location at the location of the first access point that is the start location using the sensor information. For example, based on information collected through sensors of the electronic device (e.g., gyroscopic sensor, geomagnetic sensor, acceleration sensor, or digital compass) based on the first access point, the rough proceeding direction and the location of the electronic device can be continuously displayed to the user in step 1319. According to an embodiment of the present disclosure, the location information of the electronic device is displayed using the pedestrian dead reckoning is illustrated in FIG. 16.

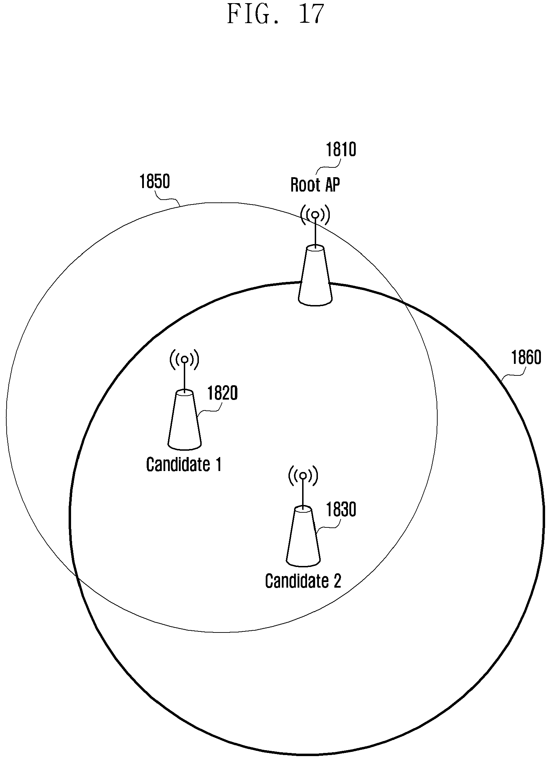

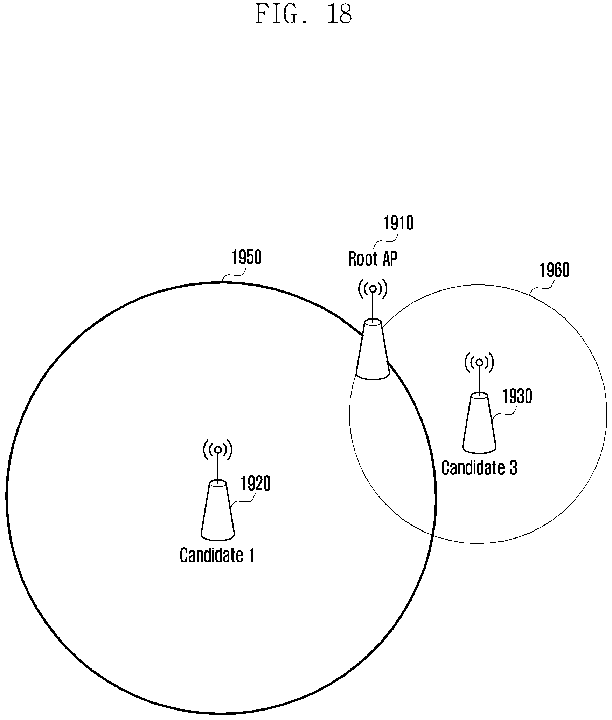

FIGS. 17 and 18 are diagrams explaining a method for selecting an optimum location through reflection of suitable location candidates of an access point measured.

Hereinafter, an operation for finally guiding a user to a suitable location after determining whether it is suitable for installing the second access point at several indoor locations will be described. This may differ in accordance with the network forming method for the pre-installed first access point and at least one second access point to be additionally installed.

For example, as illustrated in FIG. 17, if two or more second access points 1820 and 1830 to be installed exist, all the second access points 1820 and 1830 and the first access point 1810 should be connected to each other.

The electronic device according to various embodiments of the present disclosure may determine whether it is suitable to perform communication between the second access point and the first access point at their locations. However, if a plurality of second access points 1820 and 1830 are additionally installed, there is not a process of determining the wireless state between the second access points 1820 and 1830, and thus whether mutual connection between the second access points is actually possible should be estimated based on the coverage based on the wireless state with the first access point.

The processor 610 may determine coverages 1850 and 1860 of the second access points 1820 and 1830, and may determine at least one location in which the first access point 1810 can be positioned in the coverages 1850 and 1860 of all the second access points 1820 and 1830.

The processor may provide the determined candidate locations to the user through the display.

As illustrated in FIG. 18, if two or more second access points are to be additionally installed, it may be sufficient for the respective second access points 1920 and 1930 are connected only to the first access point 1910.

In this case, candidate locations may be selected considering that coverages 1950 and 1960 of the second access points 1920 and 1930 do not overlap each other, if possible, based on the measured candidate locations. This is to consider that if the coverages 1950 and 1960 of the second access points 1920 and 1930 overlap each other, interference occurs.

The coverage may differ in accordance with the coverage according to the bands (e.g., 2 GHz, 5 GHz, and 60 GHz) of the second access point. In this case, location suitability may be determined based on the coverage of the band having the widest coverage, and communication between the second access points may be set to be performed only through the corresponding bands.

According to the various embodiments of the present disclosure as described above, it is determined whether it is suitable to install the access point at the corresponding location based on the wireless state measured on the electronic device. However, contrary to this, in examples it may be determined whether it is suitable for communication of the electronic device at the corresponding location based on the wireless state measured on the access point. For example, the second access point may sense the signal output from the first access point, acquire the first value from the sensed signal, acquire the second value from the first value, compare the second value with the threshold value, and determine whether the current location of the electronic device is suitable for the wireless communication with the first access point based at least partly on the result of the comparison.

The scope of the present disclosure is defined by the appended claims.

## Claims

1. A method of determining a location for an access point using an electronic device, comprising:
sensing a signal from a first access point using the electronic device (910), when the electronic device including a wireless communication circuit is positioned at a location separate from the first access point;
determining a first value relating to a parameter of the wireless communication between the electronic device and the first access point from the sensed signal using the electronic device (912),
converting the first value into a second value using the electronic device (913), wherein converting the first value into the second value comprises determining the second value mapped on the determined first value in a predetermined table corresponding to the electronic device and the second access point;
comparing the second value with a threshold value using the electronic device (914); and
determining, by the electronic device, whether the location is suitable for a second access point that is to be wirelessly linked to the first access point based at least partly on the result of the comparison (915, 916).

2. The method of claim 1, wherein determining the first value comprises determining received signal strength indication, RSSI, from the sensed signal.

3. The method of claim 1, wherein converting the first value into the second value (913) comprises adding a selected value to the first value.

4. The method of claim 3, wherein comparing the second value with a threshold value (914) comprises:
determining a modulation coding scheme, MCS, index based at least partly on the second value;
determining a throughput based at least partly on the determined MCS index; and
comparing the determined throughput with the threshold value.

5. The method of claim 1, further comprising:
sensing the signal from the first access point in a state where the electronic device has moved to another location that is different from the location; and
determining whether the moved location is suitable for the second access point to be wirelessly linked to the first access point based on the signal sensed in the state where the electronic device has moved to the other location.

6. An electronic device comprising:
a display (640);
a communication circuit (630) configured to transceive a radio signal;
a memory (620); and
a processor (610) electrically connected to the display (640), the communication circuit (630), and the memory (620),
wherein the processor (610) is configured to:
sense a signal from a first access point through the communication circuit (630) in a state where the electronic device is separated from the first access point,
determine a first value relating to a parameter of the wireless communication between the electronic device and the first access point from the sensed signal,
convert the first value into a second value, wherein the processor is further configured to determine the second value mapped on the determined first value in a predetermined table corresponding to the electronic device and the second access point,
compare the second value with a threshold value, and
determine whether a location is suitable for a second access point to be wirelessly linked to the first access point based at least partly on the result of the comparison.

7. The electronic device of claim 6, wherein the first value comprises a received signal strength indication (RSSI) of the sensed signal.

8. The electronic device of claim 6, wherein the processor (610) is further configured to acquire the second value by adding a selected value to the first value.

9. The electronic device of claim 8, wherein the processor (610) is further configured to determine a modulation coding scheme, MCS, index based at least partly on the second value,
determine a throughput based at least partly on the determined MCS index, and
compare the determined throughput with the threshold value.

10. The electronic device of claim 6, wherein the communication circuit (630) senses the signal from the first access point in a state where the electronic device has moved to another location that is different from the location, and
the processor (610) is further configured to determine whether the moved location is suitable for the second access point to be wirelessly linked to the first access point based on the signal sensed in the state where the electronic device has moved to the other location.

11. The electronic device of claim 6, wherein the processor (610) is further configured to display whether it is suitable to install the second access point in at least one location on a display of the electronic device based on the result of measurement in the at least one location.

12. The electronic device of claim 11, wherein the processor (610) is further configured to display whether it is suitable to install the second access point in the at least one location in map information if acquisition of the map information is possible, and
display a relative location to the at least one location from the location of the first access point if the acquisition of the map information is not possible.

## Patentansprüche

1. Verfahren zum Bestimmen eines Ortes für einen Zugangspunkt unter Verwendung einer elektronischen Vorrichtung, umfassend:
Erfassen eines Signals von einem ersten Zugangspunkt unter Verwendung der elektronischen Vorrichtung (910), wenn die elektronische Vorrichtung einschließlich eines drahtlosen Kommunikationsschaltkreises an einem Ort positioniert ist, der von dem ersten Zugangspunkt getrennt ist;
Bestimmen eines ersten Wertes bezüglich eines Parameters der drahtlosen Kommunikation zwischen der elektronischen Vorrichtung und dem ersten Zugangspunkt aus dem erfassten Signal unter Verwendung der elektronischen Vorrichtung (912),
Umwandeln des ersten Wertes in einen zweiten Wert unter Verwendung der elektronischen Vorrichtung (913), wobei das Umwandeln des ersten Wertes in den zweiten Wert das Bestimmen des zweiten Wertes, der auf den bestimmten ersten Wert in einer vorbestimmten Tabelle abgebildet ist, die der elektronischen Vorrichtung und dem zweiten Zugangspunkt entspricht, umfasst;
Vergleichen des zweiten Wertes mit einem Schwellenwert unter Verwendung der elektronischen Vorrichtung (914); und
Bestimmen durch die elektronische Vorrichtung, ob der Ort für einen zweiten Zugangspunkt geeignet ist, der drahtlos mit dem ersten Zugangspunkt verbunden werden soll, basierend auf mindestens teilweise dem Ergebnis des Vergleichs (915, 916).

2. Verfahren nach Anspruch 1, wobei das Bestimmen des ersten Wertes das Bestimmen der empfangenen Signalstärkenanzeige, RSSI, von dem erfassten Signal umfasst.

3. Verfahren nach Anspruch 1, wobei das Umwandeln des ersten Wertes in den zweiten Wert (913) das Hinzufügen eines ausgewählten Wertes zu dem ersten Wert umfasst.

4. Verfahren nach Anspruch 3,
wobei das Vergleichen des zweiten Wertes mit einem Schwellenwert (914) Folgendes umfasst:
Bestimmen eines Modulationskodierungsschema (MCS)-Index, basierend zumindest teilweise auf dem zweiten Wert;
Bestimmen eines Datenflusses basierend zumindest teilweise auf dem bestimmten MCS-Index; und
Vergleichen des bestimmten Datenflusses mit dem Schwellenwert.

5. Verfahren nach Anspruch 1, das des Weiteren Folgendes umfasst:
Erfassen des Signals von dem ersten Zugangspunkt in einem Zustand, in welchem sich die elektronische Vorrichtung zu einem anderen Ort bewegt hat, der sich von dem Ort unterscheidet; und
Bestimmen, ob der bewegte Ort geeignet ist, den zweiten Zugangspunkt drahtlos mit dem ersten Zugangspunkt zu verbinden, basierend auf dem Signal, das in dem Zustand erfasst wird, in welchem sich die elektronische Vorrichtung zu einem anderen Ort bewegt hat.

6. Elektronische Vorrichtung umfassend:
ein Display (640);
einen Kommunikationsschaltkreis (630), der konfiguriert ist, um Funksignale zu senden und empfangen;
einen Speicher (620); und
einen Prozessor (610), der elektrisch mit dem Display (640), dem Kommunikationsschaltkreis (630), und dem Speicher (620) verbunden ist,
wobei der Prozessor (610) für Folgendes konfiguriert ist:
Erfassen eines Signals von einem ersten Zugangspunkt über den Kommunikationsschaltkreis (630) in einem Zustand, in dem die elektronische Vorrichtung von dem ersten Zugangspunkt getrennt wird,
Bestimmen eines ersten Werts in Bezug auf einen Parameter der drahtlosen Kommunikation zwischen der elektronischen Vorrichtung und dem ersten Zugangspunkt aus dem erfassten Signal,
Umwandeln des ersten Werts in einen zweiten Wert, wobei der Prozessor des Weiteren konfiguriert ist, um den zweiten Wert zu bestimmen, der auf dem bestimmten ersten Wert in einer vorbestimmten Tabelle entsprechend der elektronischen Vorrichtung und dem zweiten Zugangspunkt abgebildet ist,
Vergleichen des zweiten Werts mit einem Schwellenwert, und
Bestimmen, ob ein Ort für eine drahtlose Verbindung eines zweiten Zugangspunkts mit dem ersten Zugangspunkt geeignet ist, zumindest teilweise basierend auf dem Ergebnis des Vergleichs.

7. Elektronische Vorrichtung nach Anspruch 6, wobei der erste Wert eine empfangene Signalstärkenanzeige (RSSI) des erfassten Signals umfasst.

8. Elektronische Vorrichtung nach Anspruch 6, wobei der Prozessor (610) des Weiteren konfiguriert ist, um den zweiten Wert durch Addition eines ausgewählten Wertes zu dem ersten Wert zu erfassen.

9. Elektronische Vorrichtung nach Anspruch 8, wobei der Prozessor (610) des Weiteren konfiguriert ist, um einen Modulationskodierungsschema (MCS)-Index basierend zumindest teilweise auf dem zweiten Wert zu bestimmen, Bestimmen eines Datenflusses basierend zumindest teilweise auf dem bestimmten MCS-Index, und
Vergleichen des bestimmten Datenflusses mit dem Schwellenwert.

10. Elektronische Vorrichtung nach Anspruch 6, wobei der Kommunikationsschaltkreis (630) das Signal von dem ersten Zugangspunkt in einem Zustand erfasst, in dem sich die elektronische Vorrichtung zu einem anderen Ort bewegt hat, der sich von dem Ort unterscheidet, und
der Prozessor (610) des Weiteren konfiguriert ist, um zu bestimmen, ob der bewegte Ort für den zweiten Zugangspunkt geeignet ist, um drahtlos mit dem ersten Zugangspunkt verbunden zu werden, basierend auf dem Signal, das in dem Zustand erfasst wird, in dem sich die elektronische Vorrichtung zu dem anderen Ort bewegt hat.

11. Elektronische Vorrichtung nach Anspruch 6, wobei der Prozessor (610) des Weiteren konfiguriert ist, um anzuzeigen, ob es geeignet ist, den zweiten Zugangspunkt an mindestens einem Ort auf einem Display der elektronischen Vorrichtung basierend auf dem Messergebnis an dem mindestens einem Ort zu installieren.

12. Elektronische Vorrichtung nach Anspruch 11,
wobei der Prozessor (610) des Weiteren konfiguriert ist, um anzuzeigen, ob es geeignet ist, den zweiten Zugangspunkt an dem mindestens einen Ort der Karteninformationen zu installieren, wenn eine Erfassung der Karteninformationen möglich ist, und
Anzeigen eines relativen Orts für den mindestens einen Ort von dem Ort des ersten Zugangspunkts, wenn die Erfassung der Karteninformationen nicht möglich ist.

## Revendications

1. Procédé de détermination d'un emplacement pour un point d'accès en utilisant un dispositif électronique, comprenant :
détecter un signal en provenance d'un premier point d'accès en utilisant le dispositif électronique (910), lorsque le dispositif électronique incluant un circuit de communication sans fil est positionné à un emplacement séparé du premier point d'accès ;
déterminer une première valeur concernant un paramètre de la communication sans fil entre le dispositif électronique et le premier point d'accès à partir du signal détecté en utilisant le dispositif électronique (912),
convertir la première valeur en une deuxième valeur en utilisant le dispositif électronique (913), où la conversion de la première valeur en la deuxième valeur comprend la détermination de la deuxième valeur mappée sur la première valeur déterminée dans un tableau prédéterminé correspondant au dispositif électronique et au deuxième point d'accès ;
comparer la deuxième valeur avec une valeur de seuil en utilisant le dispositif électronique (914) ; et
déterminer, par le dispositif électronique, si l'emplacement est approprié pour un deuxième point d'accès qui doit être connecté sans fil au premier point d'accès sur la base, au moins partiellement, du résultat de la comparaison (915, 916).

2. Procédé selon la revendication 1, où la détermination de la première valeur comprend la détermination d'une indication d'intensité de signal reçu, RSSI, à partir du signal détecté.

3. Procédé selon la revendication 1, où la conversion de la première valeur en la deuxième valeur (913) comprend l'ajout d'une valeur sélectionnée à la première valeur.

4. Procédé selon la revendication 3,
où la comparaison de la deuxième valeur avec une valeur de seuil (914) comprend :
déterminer un indice de schéma de modulation et de codage, MCS, sur la base, au moins partiellement, de la deuxième valeur ;
déterminer un débit sur la base, au moins partiellement, de l'indice de MCS déterminé ; et
comparer le débit déterminé avec la valeur de seuil.

5. Procédé selon la revendication 1, comprenant en outre :
détecter le signal en provenance du premier point d'accès dans un état où le dispositif électronique s'est déplacé à un autre emplacement qui est différent de l'emplacement ; et
déterminer si l'emplacement déplacé est approprié pour que le deuxième point d'accès soit connecté sans fil au premier point d'accès sur la base du signal détecté dans l'état où le dispositif électronique s'est déplacé à l'autre emplacement.

6. Dispositif électronique comprenant :
une unité d'affichage (640) ;
un circuit de communication (630) configuré pour émettre et recevoir un signal radio ;
une mémoire (620) ; et
un processeur (610) connecté électriquement à l'unité d'affichage (640), au circuit de communication (630) et à la mémoire (620),
où le processeur (610) est configuré pour :
détecter un signal en provenance d'un premier point d'accès à travers le circuit de communication (630) dans un état où le dispositif électronique est séparé à partir du premier point d'accès,
déterminer une première valeur concernant un paramètre de la communication sans fil entre le dispositif électronique et le premier point d'accès du signal détecté,
convertir la première valeur en une deuxième valeur, où le processeur est configuré en outre pour déterminer la deuxième valeur mappée sur la première valeur déterminée dans un tableau prédéterminé correspondant au dispositif électronique et au deuxième point d'accès,
comparer la deuxième valeur avec une valeur de seuil, et
déterminer si un emplacement est approprié pour qu'un deuxième point d'accès soit connecté sans fil au premier point d'accès sur la base, au moins partiellement, du résultat de la comparaison.

7. Dispositif électronique selon la revendication 6, où la première valeur comprend une indication d'intensité de signal reçu (RSSI) du signal détecté.

8. Dispositif électronique selon la revendication 6, où le processeur (610) est configuré en outre pour acquérir la deuxième valeur en ajoutant une valeur sélectionnée à la première valeur.

9. Dispositif électronique selon la revendication 8, où le processeur (610) est configuré en outre pour déterminer un indice de schéma de modulation et de codage, MCS, sur la base, au moins partiellement, de la deuxième valeur, déterminer un débit sur la base, au moins partiellement, de l'indice de MCS déterminé, et
comparer le débit déterminé avec la valeur de seuil.

10. Dispositif électronique selon la revendication 6, où le circuit de communication (630) détecte le signal en provenance du premier point d'accès dans un état où le dispositif électronique s'est déplacé à un autre emplacement qui est différent de l'emplacement, et
le processeur (610) est configuré en outre pour déterminer si l'emplacement déplacé est approprié pour que le deuxième point d'accès soit connecté sans fil au premier point d'accès sur la base du signal détecté dans l'état où le dispositif électronique s'est déplacé à l'autre emplacement.

11. Dispositif électronique selon la revendication 6, où le processeur (610) est configuré en outre pour afficher s'il est approprié d'installer le deuxième point d'accès dans au moins un emplacement sur une unité d'affichage du dispositif électronique sur la base du résultat de mesure dans l'au moins un emplacement.

12. Dispositif électronique selon la revendication 11,
où le processeur (610) est configuré en outre pour afficher s'il est approprié d'installer le deuxième point d'accès dans l'au moins un emplacement dans des informations de carte si l'acquisition des informations de carte est possible, et
afficher un emplacement relatif à l'au moins un emplacement à partir de l'emplacement du premier point d'accès si l'acquisition des informations de carte n'est pas possible.
